(19) Europäisches Patentamt
European Patent Office
Office européen des brevets

(11) **EP 2 182 735 A2**

(12) **EUROPEAN PATENT APPLICATION**

(43) Date of publication:
**05.05.2010 Bulletin 2010/18**

(51) Int Cl.:
*H04N 9/76* *(2006.01)*   *H04N 5/445* *(2006.01)*
*H04N 5/57* *(2006.01)*

(21) Application number: **09174435.9**

(22) Date of filing: **29.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.10.2008 JP 2008277701**

(71) Applicant: **Sony Corporation**
**Tokyo (JP)**

(72) Inventors:
• **Tsukamoto, Makoto**
**TOKYO (JP)**
• **Ikeda, Kiyoshi**
**TOKYO (JP)**

(74) Representative: **Thévenet, Jean-Bruno et al**
**Cabinet Beau de Loménie**
**158, rue de l'Université**
**75340 Paris Cédex 07 (FR)**

(54) **Image processing apparatus, image processing method, and program**

(57)   An image processing apparatus includes a multiplying unit (52) configured to multiply an original image by a coefficient α used for α blending, thereby generating an α-fold original image, a quantizing unit (53) configured to quantize the α-fold original image and output a quantized α-fold original image obtained through the quantization, a gradation converting unit (54) configured to perform gradation conversion on the α-fold original image by performing a dithering process, thereby generating a gradation-converted α-fold original image, and a difference calculating unit (55) configured to calculate a difference between the gradation-converted α-fold original image and the quantized α-fold original image, thereby obtaining a high-frequency component in the gradation-converted α-fold original image, the high-frequency component being added to a quantized composite image, which is generated by quantizing a composite image obtained through α blending with a quantized image generated by quantizing the original image.

FIG. 7

41

## Description

BACKGROUND OF THE INVENTION

1. Field of the Invention

The present invention relates to an image processing apparatus, an image processing method, and a program. Particularly, the present invention relates to an image processing apparatus, an image processing method, and a program that enable obtaining a high-gradation image approximate to an original image in a case where $\alpha$ blending of blending images by using a predetermined coefficient $\alpha$ as a weight is performed on a quantized image generated by quantizing the original image.

2. Description of the Related Art

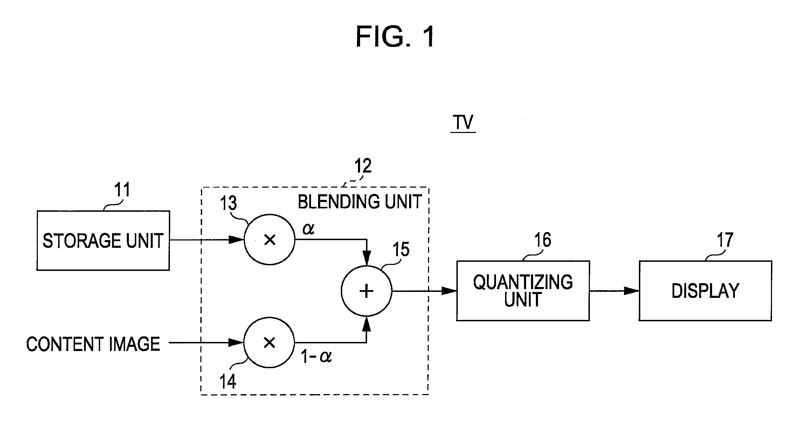

Fig. 1 illustrates a configuration of an example of a television receiver (hereinafter referred to as TV) according to a related art.
Referring to Fig. 1, the TV includes a storage unit 11, a blending unit 12, a quantizing unit 16, and a display 17.
The storage unit 11 stores an image of a menu screen, a background image serving as a background of something, and the like.
That is, the storage unit 11 stores an image file storing the image of the menu screen, for example.
Here, an original image of the menu screen is an image of a large number of bits, e.g., an image in which each of RGB (Red, Green, and Blue) components is 16 bits (hereinafter referred to as 16-bit image), created as an image of the menu screen by a designer using an image creation tool.
However, the image of the menu screen stored in the storage unit 11 is an image of a small number of bits, generated by quantizing the original image for reducing the capacity and a calculation amount in the TV.
Specifically, the 16-bit image as the original image of the menu screen is quantized into an image of smaller than 16 bits, e.g., 8 bits (e.g., lower bits are truncated so that only higher 8 bits remain), thereby being converted into an 8-bit image through the quantization. The 8-bit image is stored in an image file in the form of PNG (Portable Network Graphics) or the like, which is stored in the storage unit 11.
The image file storing the 8-bit image as the menu screen is written (stored) in the storage unit 11 in a factory or the like where the TV is manufactured.
The blending unit 12 is supplied with the 8-bit image of the menu screen stored in the image file in the storage unit 11 and an image of a program of television broadcast (hereinafter referred to as content image) output from a tuner or the like (not illustrated).
The blending unit 12 performs $\alpha$ blending of blending images by using a predetermined coefficient $\alpha$ as a weight, thereby generating a composite image in which the 8-bit image of the menu screen supplied from the storage unit 11 and the content image supplied from the tuner are blended, and then supplies the composite image to the quantizing unit 16.
Specifically, the blending unit 12 includes calculating units 13, 14, and 15.
The calculating unit 13 is supplied with the 8-bit image of the menu screen from the storage unit 11. The calculating unit 13 multiplies (a pixel value of each pixel of) the 8-bit image of the menu screen supplied from the storage unit 11 by a coefficient $\alpha$ ($\alpha$ is a value in the range from 0 to 1) for so-called $\alpha$ blending, and supplies a product obtained thereby to the calculating unit 15.
The calculating unit 14 multiplies the content image supplied from the tuner by a coefficient $1-\alpha$ and supplies a product obtained thereby to the calculating unit 15.
The calculating unit 15 adds the product supplied from the calculating unit 13 and the product supplied from the calculating unit 14, thereby generating a composite image in which the menu screen is superimposed on the content image, and supplies the composite image to the quantizing unit 16.
The quantizing unit 16 quantizes the composite image supplied from (the calculating unit 15 of) the blending unit 12 into an image of the number of bits that can be displayed on the display 17 in the subsequent stage, e.g., into an 8-bit image, and supplies the 8-bit composite image obtained through the quantization to the display 17.
The composite image obtained as a result of $\alpha$ blending performed in the blending unit 12 may be an image of bits the number of which is larger than that of the 8-bit image that can be displayed on the display 17. The image of bits the number of which is larger than that of the 8-bit image is not displayed on the display 17 as is, and thus the quantizing unit 16 performs gradation conversion to quantize the composite image supplied from the blending unit 12 into an 8-bit image.
The display 17 is an LCD (Liquid Crystal Display), an organic EL (Electroluminescence) display, or the like capable of displaying an 8-bit image, and displays the 8-bit composite image supplied from the quantizing unit 16.
Here, the 8-bit image of the menu screen stored in the image file in the storage unit 11 is processed in the above-described manner and is displayed as a composite image on the display 17 when a user performs an operation to display the menu screen.

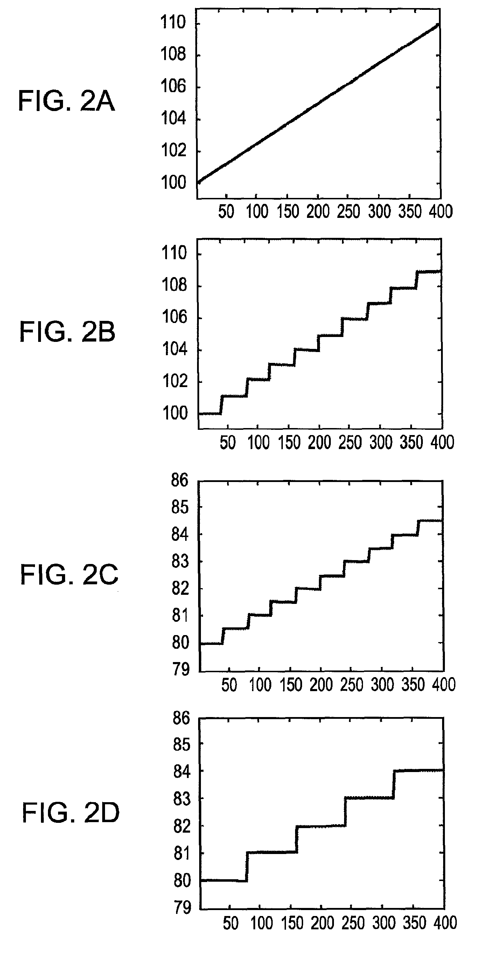

Figs. 2A to 2D explain images handled in the TV illustrated in Fig. 1.

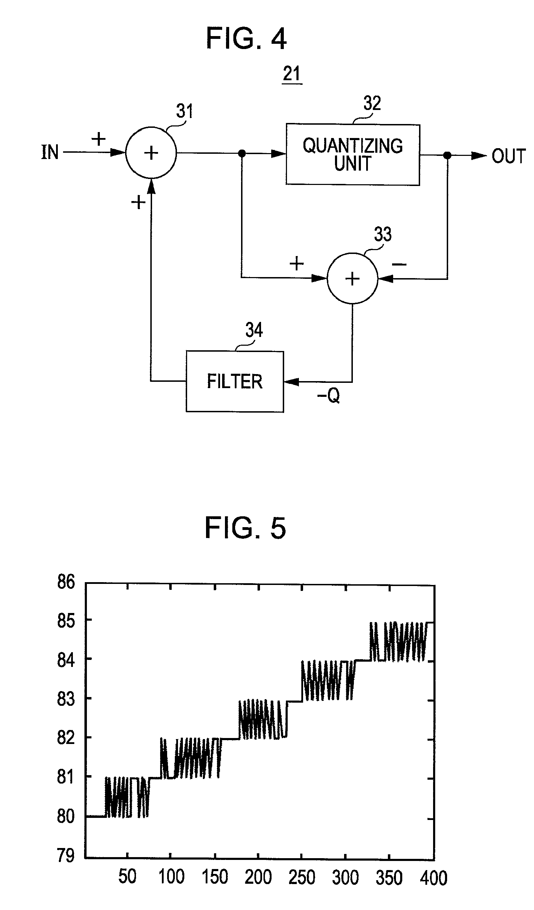

In Figs. 2A to 2D (also in Figs. 5, 9A to 9D, and 12A to 14C described below), the horizontal axis indicates positions of pixels arranged in the horizontal direction (or vertical direction), whereas the vertical axis indicates pixel values.
Fig. 2A illustrates a 16-bit image as an original image of the menu screen.

In the 16-bit image in Fig. 2A, the pixel values of the first to four hundredth pixels from the left smoothly (linearly) change from 100 to 110.

Fig. 2B illustrates an 8-bit image obtained by quantizing the 16-bit image in Fig. 2A into an 8-bit image.

In the 8-bit image in Fig. 2B, the pixel values of the first to four hundredth pixels from the left change stepwise from 100 to 109, that is, the gradation level thereof is lower than that of the 16-bit image in Fig. 2A due to the quantization. That is, the 8-bit image in Fig. 2B is a 28-gradation image.

The storage unit 11 (Fig. 1) stores the 8-bit image in Fig. 2B as the 8-bit image of the menu screen.

Fig. 2C illustrates a composite image output from the blending unit 12 (Fig. 1).

Here, assume that 0.5 is set as the coefficient $\alpha$, for example, that the 8-bit image of the menu screen in Fig. 2B is supplied to the calculating unit 13 of the blending unit 12, and that a content image having constant pixel values of 60 is supplied to the calculating unit 14.

In this case, the calculating unit 13 multiplies the 8-bit image of the menu screen in Fig. 2B by 0.5 as the coefficient $\alpha$, and supplies an image generated by multiplying the 8-bit image of the menu screen by $\alpha$ (hereinafter referred to as $\alpha$-fold image) to the calculating unit 15.

On the other hand, the calculating unit 14 multiplies the content image having constant pixel values of 60 by 0.5 as the coefficient 1-$\alpha$, and supplies an image generated by multiplying the content image by 1-$\alpha$ (hereinafter referred to as 1-$\alpha$-fold image) to the calculating unit 15.

The calculating unit 15 adds the $\alpha$-fold image supplied from the calculating unit 13 and the 1-$\alpha$-fold image supplied from the calculating unit 14, thereby generating a composite image, and supplies the composite image to the quantizing unit 16.

In this case, the composite image is a sum of the image generated by multiplying the 8-bit image of the menu screen in Fig. 2B by 0.5 and the image generated by multiplying the content image having constant pixel values of 60 by 0.5.

Fig. 2C illustrates such a composite image.

In the composite image in Fig. 2C, the image of the menu screen has a gradation level equivalent to that of the 8-bit image stored in the image file in the storage unit 11.

Fig. 2D illustrates an 8-bit composite image, which is an 8-bit image obtained through quantization performed on the composite image in Fig. 2C by the quantizing unit 16.

The $\alpha$-fold image used to generate the composite image in Fig. 2C is an image obtained by multiplying the 8-bit image of the menu screen in Fig. 2B by 0.5 (= 2-1) as the coefficient $\alpha$. When the composite image generated by using the $\alpha$-fold image is quantized into an 8-bit image, the image of the menu screen in the 8-bit image obtained thereby is substantially a 27 (= 28-1)-gradation image, and thus the gradation level thereof is lower than that of the 8-bit image stored in the image file in the storage unit 11.

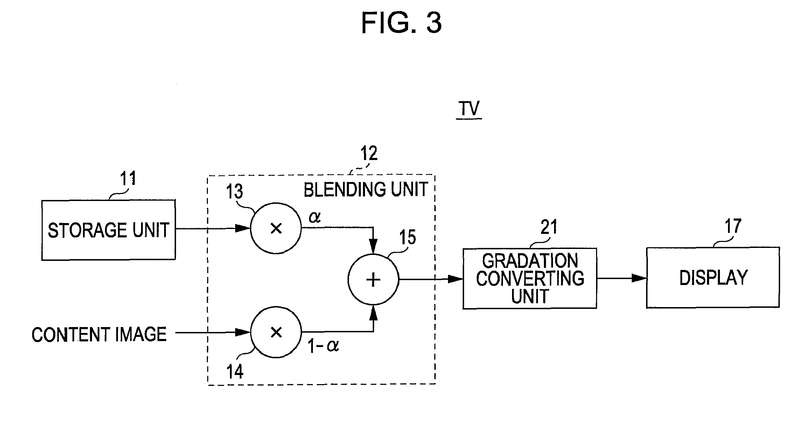

Fig. 3 illustrates a configuration of another example of a TV according to a related art.

In Fig. 3, the parts corresponding to those in Fig. 1 are denoted by the same reference numerals.

The TV in Fig. 3 has the same configuration as that of the TV in Fig. 1 except that a gradation converting unit 21 is provided instead of the quantizing unit 16 (Fig. 1).

The gradation converting unit 21 performs, not simple quantization, but gradation conversion of an image by using a dithering process of quantizing the image after adding noise thereto.

That is, the gradation converting unit 21 performs gradation conversion to convert the composite image supplied from the blending unit 12 into an 8-bit image by using the dithering process.

In this specification, the dithering process includes a dither method, an error diffusion method, and the like. In the dither method, noise unrelated to an image, such as random noise, is added to the image, and then the image is quantized. In the error diffusion method, (a filtering result) of a quantization error as noise of an image is added to the image (error diffusion), and then the image is quantized (e.g., see "Yoku wakaru dijitaru gazou shori" by Hitoshi KIYA, Sixth edition, CQ Publishing).

Fig. 4 illustrates an exemplary configuration of the gradation converting unit 21 in Fig. 3 in a case where the gradation converting unit 21 performs gradation conversion on the basis of the error diffusion method.

The gradation converting unit 21 includes a calculating unit 31, a quantizing unit 32, a calculating unit 33, and a filter 34.

The calculating unit 31 is supplied with pixel values IN of respective pixels in the composite image supplied from the blending unit 12 (Fig. 3) as a target image of gradation conversion in a raster scanning order.

Furthermore, the calculating unit 31 is supplied with outputs of the filter 34.

The calculating unit 31 adds the pixel value IN of the composite image and the output of the filter 34 and supplies a sum value obtained thereby to the quantizing unit 32 and the calculating unit 33.

The quantizing unit 32 quantizes the sum value supplied from the calculating unit 31 into 8 bits, which is the number of bits that can be displayed on the display 17 (Fig. 3), and outputs an 8-bit quantized value obtained thereby as a pixel value OUT of the image after gradation conversion.

The pixel value OUT output from the quantizing unit 32 is also supplied to the calculating unit 33.

The calculating unit 33 subtracts the pixel value OUT supplied from the quantizing unit 32 from the sum value supplied from the calculating unit 31, that is, subtracts the output of the quantizing unit 32 from the input to the quantizing unit 32, thereby obtaining a quantization error -Q caused by the quantization performed by the quantizing unit 32, and supplies the quantization error -Q to the filter 34.

The filter 34 is a two-dimensional FIR (Finite Impulse Response) filter for filtering signals, filters the quantization error -Q supplied from the calculating unit 33, and outputs a filtering result to the calculating unit 31.

Accordingly, the filtering result of the quantization error -Q output from the filter 34 and the pixel value IN are added by the calculating unit 31.

In the gradation converting unit 21 in Fig. 4, the quantization error -Q is fed back to the input side (calculating unit 31) via the filter 34, which is a two-dimensional FIR filter. With this configuration, a $\Delta\Sigma$ modulator that performs two-dimensional $\Delta\Sigma$ modulation is constituted.

According to the $\Delta\Sigma$ modulator, the quantization error -Q is diffused to a high range of spatial frequencies (noise shaping is performed) in two-dimensional space directions, that is, in either of the horizontal direction (x direction) and the vertical direction (y direction). As a result, an image of higher quality can be obtained as a gradation-converted image, compared to the case of using the dither method in which quantization is performed after noise unrelated to the image has been added.

Fig. 5 illustrates an 8-bit image that is obtained by performing gradation conversion based on the error diffusion method on the composite image in Fig. 2C.

In the error diffusion method, that is, in the $\Delta\Sigma$ modulation, a pixel value is quantized after noise (filtering result of quantization error) is added thereto, as described above. Therefore, in a quantized (gradation-converted) image, it looks like PWM (Pulse Width Modulation) has been performed on pixel values that become constant only by truncating lower bits. As a result, the gradation of an image after $\Delta\Sigma$ modulation looks like it smoothly changes due to a space integration effect in which integration in space directions is performed in human vision. That is, a gradation level equivalent to that of an original image (28-gradation when the original image is an 8-bit image) can be expressed in a pseudo manner.

Therefore, in the image of the menu screen in the 8-bit image in Fig. 5, a gradation level equivalent to that of the image of the menu screen in the composite image output from the blending unit 12, that is, the 8-bit image of the menu screen stored in the storage unit 11, is realized in a pseudo manner.

SUMMARY OF THE INVENTION

As described above with reference to Figs. 3 and 4, when gradation conversion based on the dithering process, such as the error diffusion method, is performed on the composite image obtained through $\alpha$ blending performed by the blending unit 12, a gradation level equivalent to that of the 8-bit image of the menu screen stored in the storage unit 11 is realized in a pseudo manner in the image of the menu screen in the gradation-converted image.

However, in the gradation-converted image, the gradation level of the image of the menu screen is not equivalent to that of the 16-bit original image.

In a case where the gradation converting unit 21 in Fig. 3 is constituted by the $\Delta\Sigma$ modulator in Fig. 4 and where gradation conversion based on the error diffusion method is performed, a quantization error of a pixel value of a current target pixel of the gradation conversion is fed back to the calculating unit 31 so as to be used for gradation conversion of a next target pixel. Thus, gradation conversion of a next target pixel can be started only after gradation conversion of the current target pixel ends. That is, in the case where the gradation converting unit 21 in Fig. 3 is constituted by the $\Delta\Sigma$ modulator in Fig. 4, just ending addition of a pixel value of a certain pixel does not allow the calculating unit 31 (Fig. 4) to start addition of a pixel value of a next pixel. Therefore, a pipeline process of starting addition of a pixel value of a next pixel after ending addition of a pixel value of a certain pixel is not performed in the calculating unit 31.

Accordingly, it is desirable to obtain a high-gradation image approximate to an original image in a case where $\alpha$ blending of blending images by using a predetermined coefficient $\alpha$ as a weight is performed on a quantized image generated by quantizing the original image.

According to an embodiment of the present invention, there is provided an image processing apparatus including multiplying means for multiplying an original image by a predetermined coefficient $\alpha$ used for $\alpha$ blending of blending images with use of the coefficient $\alpha$ as a weight, thereby generating an $\alpha$-fold original image, which is the original image in which pixel values are multiplied by $\alpha$, quantizing means for quantizing the $\alpha$-fold original image and outputting a quantized $\alpha$-fold original image obtained through the quantization, gradation converting means for performing gradation conversion on the $\alpha$-fold original image by performing a dithering process of quantizing the image after adding noise to the image, thereby generating a gradation-converted $\alpha$-fold original image, which is the $\alpha$-fold original image after gradation conversion, and difference calculating means for calculating a difference between the gradation-converted $\alpha$-fold original image and the quantized $\alpha$-fold original image, thereby obtaining a high-frequency component in the gradation-converted $\alpha$-fold original image, the high-frequency component being added to a quantized composite image, which is generated by quantizing a composite image obtained through $\alpha$ blending with a quantized image generated by quantizing the original image. Also, there is provided a program causing a computer to function as the image processing apparatus.

According to an embodiment of the present invention, there is provided an image processing method for an image processing apparatus. The image processing method includes the steps of multiplying an original image by a predetermined coefficient $\alpha$ used for $\alpha$ blend-

ing of blending images with use of the coefficient α as a weight, thereby generating an α-fold original image, which is the original image in which pixel values are multiplied by α, quantizing the α-fold original image and outputting a quantized α-fold original image obtained through the quantization, performing gradation conversion on the α-fold original image by performing a dithering process of quantizing the image after adding noise to the image, thereby generating a gradation-converted α-fold original image, which is the α-fold original image after gradation conversion, and calculating a difference between the gradation-converted α-fold original image and the quantized α-fold original image, thereby obtaining a high-frequency component in the gradation-converted α-fold original image, the high-frequency component being added to a quantized composite image, which is generated by quantizing a composite image obtained through α blending with a quantized image generated by quantizing the original image.

In the foregoing image processing apparatus, image processing method, and program, an original image is multiplied by a predetermined coefficient α used for α blending of blending images with use of the coefficient α as a weight, whereby an α-fold original image, which is the original image in which pixel values are multiplied by α, is generated, the α-fold original image is quantized, and a quantized α-fold original image obtained through the quantization is output. Furthermore, gradation conversion on the α-fold original image is performed by performing a dithering process of quantizing the image after adding noise to the image, whereby a gradation-converted α-fold original image, which is the α-fold original image after gradation conversion, is generated. Then, a difference between the gradation-converted α-fold original image and the quantized α-fold original image is calculated, whereby a high-frequency component in the gradation-converted α-fold original image is obtained. The high-frequency component is added to a quantized composite image, which is generated by quantizing a composite image obtained through α blending with a quantized image generated by quantizing the original image.

According to an embodiment of the present invention, there is provided an image processing apparatus including blending means for performing α blending of blending images with use of a predetermined coefficient α as a weight, thereby generating a composite image in which a quantized image generated by quantizing an original image and another image are blended, quantizing means for quantizing the composite image and outputting a quantized composite image obtained through the quantization, and adding means for adding the quantized composite image and a predetermined high-frequency component, thereby generating a pseudo high-gradation image having a pseudo high gradation level. The predetermined high-frequency component is a high-frequency component in a gradation-converted α-fold original image. The high-frequency component is obtained by multiplying the original image by the predetermined coefficient α, thereby generating an α-fold original image, which is the original image in which pixel values are multiplied by α, quantizing the α-fold original image and outputting a quantized α-fold original image obtained through the quantization, performing gradation conversion on the α-fold original image by performing a dithering process of quantizing the image after adding noise to the image, thereby generating the gradation-converted α-fold original image, which is the α-fold original image after gradation conversion, and calculating a difference between the gradation-converted α-fold original image and the quantized α-fold original image. Also, there is provided a program causing a computer to function as the image processing apparatus.

According to an embodiment of the present invention, there is provided an image processing method for an image processing apparatus. The image processing method includes the steps of performing α blending of blending images with use of a predetermined coefficient α as a weight, thereby generating a composite image in which a quantized image generated by quantizing an original image and another image are blended, quantizing the composite image and outputting a quantized composite image obtained through the quantization, and adding the quantized composite image and a predetermined high-frequency component, thereby generating a pseudo high-gradation image having a pseudo high gradation level. The predetermined high-frequency component is a high-frequency component in a gradation-converted α-fold original image. The high-frequency component is obtained by multiplying the original image by the predetermined coefficient α, thereby generating an α-fold original image, which is the original image in which pixel values are multiplied by α, quantizing the α-fold original image and outputting a quantized α-fold original image obtained through the quantization, performing gradation conversion on the α-fold original image by performing a dithering process of quantizing the image after adding noise to the image, thereby generating the gradation-converted α-fold original image, which is the α-fold original image after gradation conversion, and calculating a difference between the gradation-converted α-fold original image and the quantized α-fold original image.

In the foregoing image processing apparatus, image processing method, and program, α blending of blending images with use of a predetermined coefficient α as a weight is performed, whereby a composite image in which a quantized image generated by quantizing an original image and another image are blended is generated, the composite image is quantized, and a quantized composite image obtained through the quantization is output. Then, the quantized composite image and a predetermined high-frequency component are added, whereby a pseudo high-gradation image having a pseudo high gradation level is generated. In this case, the predetermined high-frequency component is a high-frequency component in a gradation-converted $\alpha$-fold original image. The high-frequency component is obtained by multiplying the original image by the predetermined coefficient $\alpha$, thereby generating an $\alpha$-fold original image, which is the original image in which pixel values are multiplied by $\alpha$, quantizing the $\alpha$-fold original image and outputting a quantized $\alpha$-fold original image obtained through the quantization, performing gradation conversion on the $\alpha$-fold original image by performing a dithering process of quantizing the image after adding noise to the image, thereby generating the gradation-converted $\alpha$-fold original image, which is the $\alpha$-fold original image after gradation conversion, and calculating a difference between the gradation-converted $\alpha$-fold original image and the quantized $\alpha$-fold original image.

The image processing apparatus may be an independent apparatus or may be an internal block constituting an apparatus.

The program can be provided by being transmitted via a transmission medium or by being recorded on a recording medium.

According to the above-described embodiments of the present invention, a high-gradation image can be obtained. Particularly, in a case where $\alpha$ blending of blending images with use of a predetermined coefficient $\alpha$ as a weight is performed on a quantized image generated by quantizing an original image, a high-gradation image approximate to the original image can be obtained.

BRIEF DESCRIPTION OF THE DRAWINGS

Fig. 1 is a block diagram illustrating a configuration of an example of a television receiver (TV) according a related art;
Figs. 2A to 2D illustrate an example of images handled in the TV according to the related art;
Fig. 3 is a block diagram illustrating a configuration of another example of a TV according a related art;
Fig. 4 is a block diagram illustrating an exemplary configuration of a gradation converting unit;
Fig. 5 illustrates an example of an 8-bit image obtained through gradation conversion based on an error diffusion method;
Fig. 6 is a block diagram illustrating an exemplary configuration of an image processing system according to an embodiment of the present invention;
Fig. 7 is a block diagram illustrating an exemplary configuration of an image generating apparatus in the image processing system;
Fig. 8 is a block diagram illustrating an exemplary configuration of a gradation converting unit in the image generating apparatus;
Figs. 9A to 9D illustrate an example of images handled in the image generating apparatus;
Fig. 10 is a flowchart illustrating an image generating process;
Fig. 11 is a block diagram illustrating an exemplary configuration of a TV in the image processing system;
Figs. 12A and 12B illustrate an example of images handled in the TV;
Figs. 13A and 13B illustrate an example of images handled in the TV;
Figs. 14A to 14C illustrate an example of images handled in the TV;
Fig. 15 is a flowchart illustrating a composite image display process;
Fig. 16 illustrates an amplitude characteristic of noise shaping using a Jarvis filter and an amplitude characteristic of noise shaping using a Floyd filter;
Fig. 17 illustrates an amplitude characteristic of noise shaping using the Jarvis filter and an amplitude characteristic of noise shaping using the Floyd filter;
Fig. 18 illustrates an amplitude characteristic of noise shaping using an SBM filter;
Fig. 19 illustrates an exemplary configuration of a filter in the gradation converting unit;
Figs. 20A and 20B illustrate a first example of filter coefficients and an amplitude characteristic of noise shaping using the SBM filter;
Figs. 21A and 21B illustrate a second example of filter coefficients and an amplitude characteristic of noise shaping using the SBM filter;
Figs. 22A and 22B illustrate a third example of filter coefficients and an amplitude characteristic of noise shaping using the SBM filter;
Fig. 23 illustrates another exemplary configuration of the filter in the gradation converting unit; and
Fig. 24 is a block diagram illustrating an exemplary configuration of a computer according to an embodiment of the present invention.

DESCRIPTION OF THE PREFERRED EMBODIMENTS

Entire configuration of an image processing system according to an embodiment of the present invention

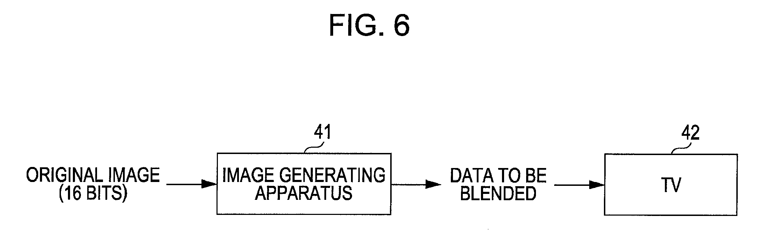

Fig. 6 illustrates an exemplary configuration of an image processing system (the term "system" means a logical set of a plurality of apparatuses, which may be placed in the same casing or separately) according to an embodiment of the present invention.

Referring to Fig. 6, the image processing system includes an image generating apparatus 41 serving as an image processing apparatus for processing images and a television receiver (hereinafter referred to as TV) 42.

The image generating apparatus 41 generates (data of) an image to be stored in the TV 42, for example, data to be blended with a content image by $\alpha$ blending.

Specifically, the image generating apparatus 41 is supplied with an image of a large number of bits, such as a 16-bit image, created as an original image of a menu screen of the TV 42 by a designer using an image creation tool.

The image generating apparatus 41 quantizes the 16-bit image as the original image of the menu screen into an image of smaller than 16 bits, for example, an 8-bit image, in order to reduce the capacity and a calculation amount in the TV 42. Then, the image generating apparatus 41 outputs data to be blended including the 8-bit image obtained through the quantization.

The data to be blended that is output from the image generating apparatus 41 is written (stored) in the TV 42 in a factory or the like where the TV 42 is manufactured.

The TV 42 performs $\alpha$ blending to blend a content image of a program and the 8-bit image included in the data to be blended when a user performs an operation to display the menu screen. Accordingly, a composite image in which the image of the menu screen is superimposed on the content image is generated and is displayed in the TV 42.

Configuration of the image generating apparatus 41

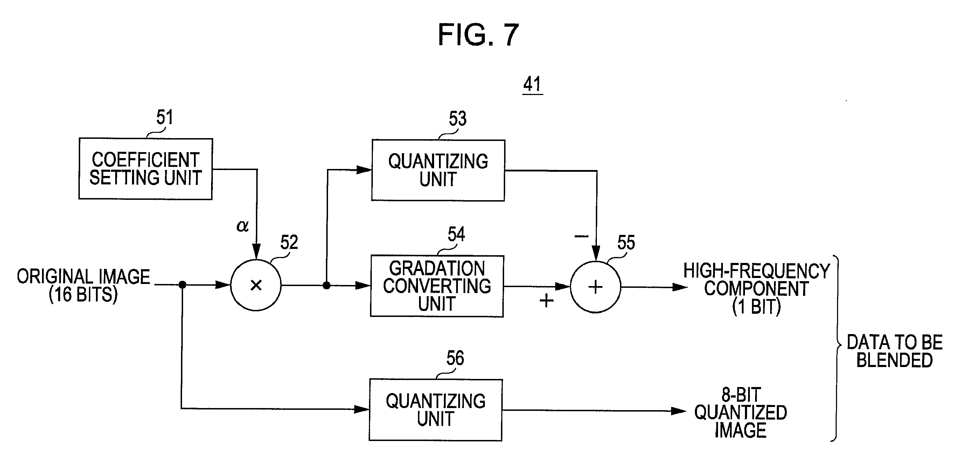

Fig. 7 illustrates an exemplary configuration of the image generating apparatus 41 in Fig. 6.

Referring to Fig. 7, the image generating apparatus 41 includes a coefficient setting unit 51, a calculating unit 52, a quantizing unit 53, a gradation converting unit 54, a calculating unit 55, and a quantizing unit 56.

The coefficient setting unit 51 sets a value or a plurality of values as a coefficient $\alpha$ that can be used for $\alpha$ blending of a content image and an image of a menu screen in the TV 42 (Fig. 6), and supplies the coefficient $\alpha$ to the calculating unit 52.

The calculating unit 52 is supplied with the coefficient $\alpha$ from the coefficient setting unit 51 and is also supplied with a 16-bit image, which is an original image of the menu screen.

The calculating unit 52 multiplies (each pixel value of) the original image by the coefficient $\alpha$ supplied from the coefficient setting unit 51, thereby generating an $\alpha$-fold original image, which is the original image in which each pixel value is multiplied by $\alpha$, and then supplies the $\alpha$-fold original image to the quantizing unit 53 and the gradation converting unit 54.

The quantizing unit 53 quantizes the $\alpha$-fold original image supplied from the calculating unit 52 into an 8-bit image of the same number of bits as that of an 8-bit quantized image obtained through quantization performed by the quantizing unit 56 described below, and supplies (outputs) a quantized $\alpha$-fold original image obtained through the quantization to the calculating unit 55.

In this embodiment, a process of extracting higher N bits as a quantized value (the decimal point of an N-bit quantized value is set as a reference, and the digits after the decimal point are truncated) is performed as quantization of N bits, for example.

The gradation converting unit 54 performs gra-

dation conversion on the $\alpha$-fold original image supplied from the calculating unit 52, thereby generating a gradation-converted $\alpha$-fold original image, which is the $\alpha$-fold original image after gradation conversion, and supplies the gradation-converted $\alpha$-fold original image to the calculating unit 55.

The gradation converting unit 54 performs gradation conversion on the $\alpha$-fold original image by performing a dithering process of quantizing the image after adding noise thereto. The gradation converting unit 54 converts the $\alpha$-fold original image into an 8-bit image of the same number of bits as that of the 8-bit quantized image obtained through quantization performed by the quantizing unit 56 by performing the dithering process.

Here, the gradation-converted $\alpha$-fold original image obtained in the gradation converting unit 54 is an 8-bit image, but is a gradation-converted image obtained by performing the dithering process on the $\alpha$-fold original image. Therefore, the gradation-converted $\alpha$-fold original image has a gradation level equivalent to that of the $\alpha$-fold original image before gradation conversion, that is, the 16-bit image as the original image of the menu screen, in a pseudo manner (due to a visual space integration effect when the image is displayed).

The calculating unit 55 calculates a difference between the gradation-converted $\alpha$-fold original image supplied from the gradation converting unit 54 and the quantized $\alpha$-fold original image supplied from quantizing unit 53, thereby obtaining and outputting a high-frequency component in the gradation-converted $\alpha$-fold original image, the high-frequency component being obtained for each pixel in the gradation-converted $\alpha$-fold original image.

The quantizing unit 56 is supplied with the 16-bit image as the original image of the menu screen, which is the same as the image supplied to the calculating unit 52. The quantizing unit 56 quantizes the 16-bit image as the original image of the menu screen into an image of smaller than 16 bits, for example, an 8-bit image, in order to reduce the capacity and the like. Then, the quantizing unit 56 outputs the 8-bit image obtained through the quantization of the original image of the menu screen (hereinafter referred to as 8-bit quantized image).

In the image generating apparatus 41, a set of the high-frequency component in the gradation-converted $\alpha$-fold original image output from the calculating unit 55 and the 8-bit quantized image output from the quantizing unit 56 is output as data to be blended.

Configuration of the gradation converting unit 54

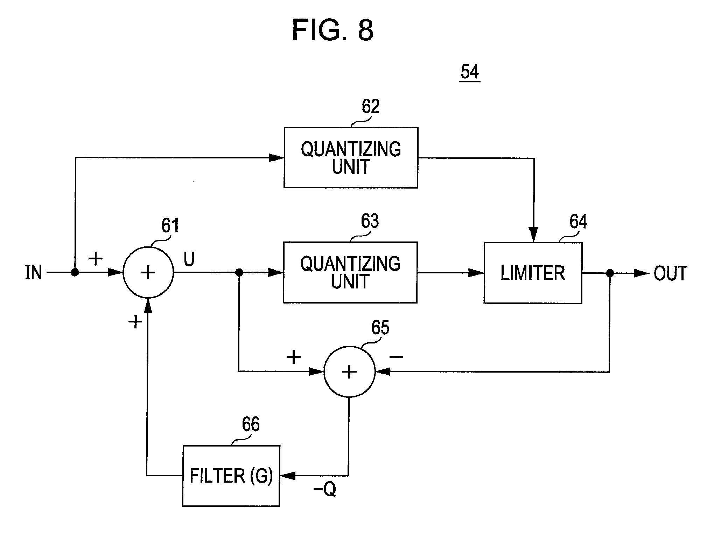

Fig. 8 illustrates an exemplary configuration of the gradation converting unit 54 in Fig. 7.

Referring to Fig. 8, the gradation converting unit 54 includes a calculating unit 61, quantizing units 62 and 63, a limiter 64, a calculating unit 65, and a filter 66, and performs gradation conversion based on the error diffusion method (dithering process), that is, $\Delta\Sigma$ modulation.

Specifically, the calculating unit 61 and the quantizing unit 62 are supplied with the α-fold original image from the calculating unit 52 (Fig. 7).

The calculating unit 61 is supplied with outputs of the filter 66 in addition to the α-fold original image.

The calculating unit 61 regards each of the pixels in the α-fold original image supplied thereto as a target pixel in a raster scanning order, adds a pixel value IN of the target pixel and the output of the filter 66, and supplies (outputs) a sum value U obtained thereby to the quantizing unit 63 and the calculating unit 65.

The quantizing unit 62 quantizes the pixel value IN of the target pixel among the pixels in the α-fold original image supplied thereto into 8 bits, as the quantizing unit 63 described below, and supplies an 8-bit quantized value obtained thereby to the limiter 64.

The quantizing unit 63 quantizes the sum value U, which is the output of the calculating unit 61, into 8 bits, as the quantizing unit 56 in Fig. 7, and supplies an 8-bit quantized value obtained thereby to the limiter 64 as a pixel value OUT of the gradation-converted α-fold original image.

The limiter 64 limits the pixel value OUT of the gradation-converted α-fold original image supplied from the quantizing unit 63 so that the high-frequency component output from the calculating unit 55 in Fig. 7 has a value expressed by 1 bit on the basis of the quantized value supplied from the quantizing unit 62, and supplies (outputs) the limited pixel value OUT to the calculating unit 55 (Fig. 7) and the calculating unit 65.

That is, when a quantized value obtained by quantizing the pixel value IN into 8 bits is represented by INT{IN}, the quantizing unit 62 outputs a quantized value INT{IN}.

The limiter 64 outputs a quantized value INT {IN} as the pixel value OUT when the pixel value OUT supplied from the quantizing unit 63 is smaller than the quantized value INT{IN} supplied from the quantizing unit 62, and outputs a quantized value INT{IN}+1 as the pixel value OUT when the pixel value OUT is larger than the quantized value INT{IN}+1.

Accordingly, the limiter 64 outputs a value in the range expressed by an expression INT{IN} ≤OUT≤INT{IN}+1, that is, INT{IN} or INT{IN}+1, as the pixel value OUT of the gradation-converted α-fold original image.

Therefore, the pixel value OUT of the gradation-converted α-fold original image output from the gradation converting unit 54 is INT{IN} or INT{IN}+1.

On the other hand, a pixel value of the quantized α-fold original image output from the quantizing unit 53 in Fig. 7 is represented by INT{IN}.

Accordingly, the high-frequency component, which is a difference between the pixel value OUT of the gradation-converted α-fold original image and the pixel value INT{IN} of the quantized α-fold original image calculated by the calculating unit 55 in Fig. 7 is 0 or 1, which is a value expressed by 1 bit.

The calculating unit 65 calculates a difference U-OUT between the sum value U, which is the output of the calculating unit 61, and the 8-bit pixel value OUT, which is a quantized value of the sum value U supplied from the quantizing unit 63 via the limiter 64, thereby obtaining and outputting a quantization error -Q included in the pixel value OUT, which is a quantized value.

Here, the quantization error -Q includes a quantization error caused by the quantization in the quantizing unit 63 and an error caused by limitation of the pixel value OUT in the limiter 64.

The quantization error -Q output from the calculating unit 65 is supplied to the filter 66.

The filter 66 is an FIR filter for performing two-dimensional filtering in space directions (hereinafter referred to as space-direction filtering), and performs space-direction filtering on the quantization error -Q supplied from the calculating unit 65. Furthermore, the filter 66 supplies (outputs) a filtering result to the calculating unit 61.

Here, when a transfer function of the filter 66 is represented by G, the relationship between the pixel value IN of the α-fold original image supplied to the gradation converting unit 54 and the pixel value OUT of the gradation-converted α-fold original image output from the gradation converting unit 54 is expressed by expression (1).

$$OUT = IN+(1\text{-}G)Q \cdots (1)$$

In expression (1), the quantization error Q is modulated with (1-G). The modulation with (1-G) corresponds to noise shaping based on ΔΣ modulation in space directions.

In the gradation converting unit 54 having the above-described configuration, the calculating unit 61 and the quantizing unit 62 wait for and receive supply of the α-fold original image of the menu screen from the calculating unit 52 (Fig. 7).

The calculating unit 61 regards, as a target pixel, a pixel that has not yet been a target pixel in the raster scanning order among the pixels in the α-fold original image supplied from the calculating unit 52. Then, the calculating unit 61 adds the pixel value of the target pixel and a value obtained in the preceding filtering performed by the filter 66 (output of the filter 66), and outputs a sum value obtained thereby to the quantizing unit 63 and the calculating unit 65.

The quantizing unit 63 quantizes the sum value, which is the output of the calculating unit 61, and supplies a quantized value including a quantization error to the limiter 64, as a pixel value of the target pixel in the gradation-converted α-fold original image.

On the other hand, the quantizing unit 62 quantizes the pixel value IN of the target pixel among the pixels in the α-fold original image supplied from the calculating unit 52 (Fig. 7) into 8 bits, and supplies an 8-bit quantized value obtained thereby to the limiter 64.

The limiter 64 limits the pixel value OUT of the gradation-converted α-fold original image supplied from the quantizing unit 63 so that the high-frequency component output from the calculating unit 55 in Fig. 7 has a value expressed by 1 bit on the basis of the quantized value supplied from the quantizing unit 62, and supplies (outputs) the limited pixel value OUT to the calculating unit 55 (Fig. 7) and the calculating unit 65.

The calculating unit 65 calculates a difference between the sum value, which is the output of the calculating unit 61, and the output of the quantizing unit 63, thereby obtaining a quantization error caused by the quantization performed by the quantizing unit 63 (including an error caused by limitation performed by the limiter 64), and supplies the quantization error to the filter 66.

The filter 66 performs space-direction filtering on the quantization error supplied from the calculating unit 65 and supplies (outputs) a filtering result to the calculating unit 61.

Then, the calculating unit 61 regards a pixel next to the target pixel in the raster scanning order as a new target pixel, and adds the pixel value of the new target pixel and the filtering result previously supplied from the filter 66. Thereafter, the same process is repeated.

Note that, in the ΔΣ modulator according to the related art illustrated in Fig. 4 described above, the pixel value OUT output from the quantizing unit 32 is not necessarily a value in the range expressed by the expression INT{IN}≤OUT≤INT{IN}+1.

On the other hand, in the gradation converting unit 54 in Fig. 8, the limiter 64 is provided in a feedback loop for feeding back a quantization error to the calculating unit 61. The existence of the limiter 64 causes the quantization error fed back to the calculating unit 61 to include an error caused by limitation of the pixel value OUT performed by the limiter 64, and the error is also diffused.

The quantizing unit 62 of the gradation converting unit 54 in Fig. 8 can be replaced by the quantizing unit 53 in Fig. 7. In this case, the quantizing unit 62 is unnecessary.

The gradation converting unit 54 can be constituted without providing the limiter 64. In this case, the quantizing unit 62 is unnecessary and thus the gradation converting unit 54 has the same configuration as that of the ΔΣ modulator in Fig. 4.

However, when the gradation converting unit 54 is constituted without providing the limiter 64, the high-frequency component (high-frequency component of one pixel) output from the calculating unit 55 (Fig. 7) does not have a value expressed by 1 bit, but has a value expressed by a plurality of bits. When the high-frequency component has a value expressed by a plurality of bits, the capacity (amount) of data to be blended increases.

Images handled in the image generating apparatus 41

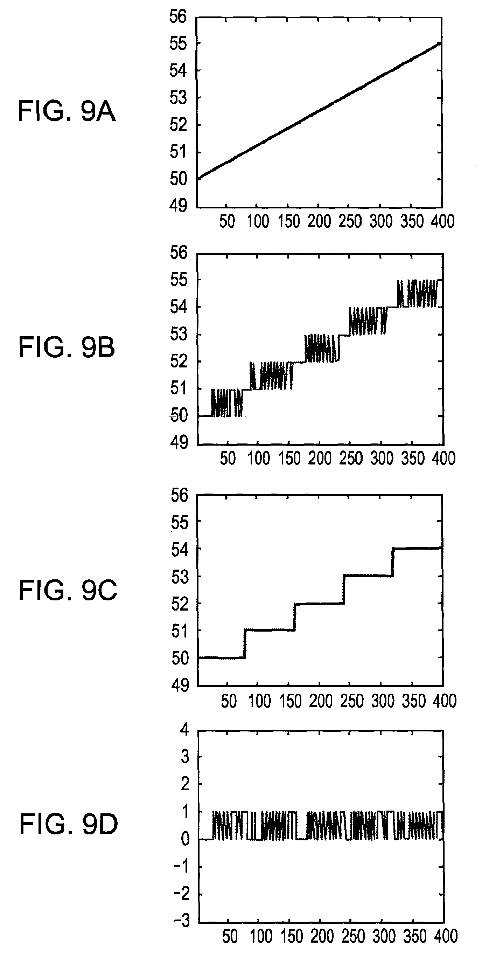

With reference to Figs. 9A to 9D, images handled in the image generating apparatus 41 in Fig. 7 are described.

Fig. 9A illustrates an α-fold original image that is obtained by multiplying the 16-bit image (Fig. 2A) as the original image of the menu screen by a coefficient α (0.5) in the calculating unit 52 (Fig. 7).

In the α-fold original image in Fig. 9A, the pixel values of the first to four hundredth pixels from the left smoothly (linearly) change from 50 to 55, and the gradation level thereof is equivalent to that of the original image (Fig. 2A).

Fig. 9B illustrates a gradation-converted α-fold original image that is obtained through gradation conversion performed on the α-fold original image in Fig. 9A by the gradation converting unit 54 (Fig. 7).

In the gradation-converted α-fold original image in Fig. 9B, the pixel values change as if PWM is performed, and it looks like the pixel values smoothly change due to a visual space integration effect.

Therefore, according to the gradation-converted α-fold original image, a gradation level equivalent to that of the α-fold original image before gradation conversion (Fig. 9A), that is, the original image, is realized in a pseudo manner.

Fig. 9C illustrates an 8-bit image as a quantized α-fold original image that is obtained through quantization performed on the α-fold original image in Fig. 9A by the quantizing unit 53 in Fig. 7 (and the quantizing unit 62 in Fig. 8).

In the quantized α-fold original image in Fig. 9C, the pixel values of the first to four hundredth pixels from the left change stepwise from 50 to 54. Compared to the α-fold original image (Fig. 9A), the gradation level decreases.

Fig. 9D illustrates a high-frequency component in the gradation-converted α-fold original image obtained through calculation of a difference between the gradation-converted α-fold original image in Fig. 9B and the quantized α-fold original image in Fig. 9C, the calculation being performed by the calculating unit 55 (Fig. 7).

The high-frequency component in Fig. 9D has a 1-bit value (0 or 1), as described above with reference to Fig. 8.

The high-frequency component in Fig. 9D can be called a component for increasing a gradation level (hereinafter referred to as gradation-level increasing component) that allows the gradation level of the gradation-converted α-fold original image in Fig. 9B to be (perceived as) equivalent to that of the original image of the menu screen in a pseudo manner.

Process performed by the image generating apparatus 41

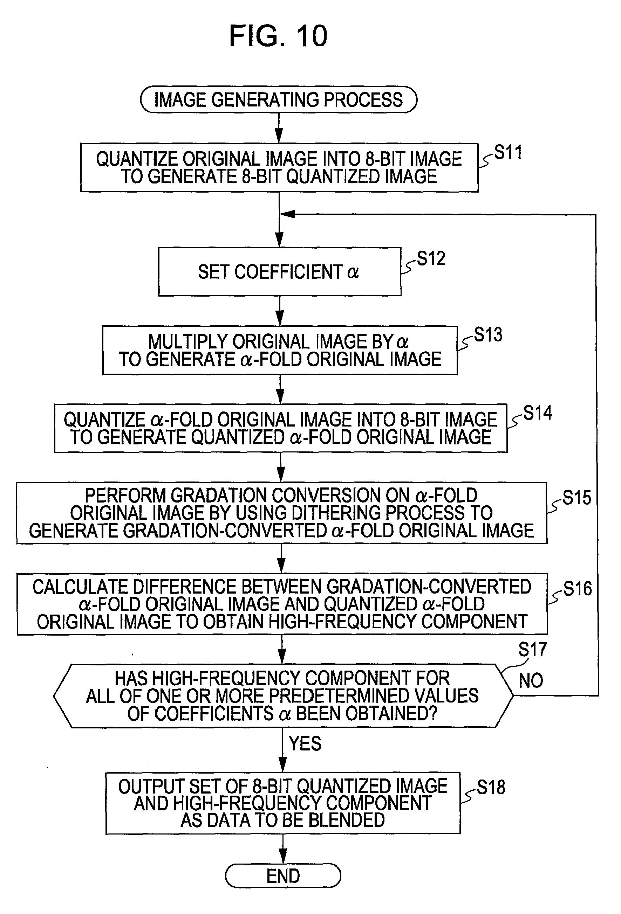

With reference to Fig. 10, a process of generating data to be blended (image generating process) performed by the image generating apparatus 41 in Fig. 7 is described.

The calculating unit 52 and the quantizing unit 56 wait for and receive a 16-bit image as an original image of a menu screen.

After receiving the original image of the menu screen, the quantizing unit 56 quantizes the original image into an 8-bit image and outputs the 8-bit quantized image in step S11. Then, the process proceeds to step S12.

In step S12, the coefficient setting unit 51 sets, as a coefficient $\alpha$, a value that has not yet been set as a coefficient $\alpha$ among one or more predetermined values, and supplies the coefficient $\alpha$ to the calculating unit 52. Then, the process proceeds to step S13.

In step S13, the calculating unit 52 multiplies the original image of the menu screen supplied thereto by the coefficient $\alpha$ supplied from the coefficient setting unit 51, thereby generating an $\alpha$-fold original image, and supplies the $\alpha$-fold original image to the quantizing unit 53 and the gradation converting unit 54. Then, the process proceeds to step S14.

In step S14, the quantizing unit 53 quantizes the $\alpha$-fold original image supplied from the calculating unit 52 into a quantized $\alpha$-fold original image, which is an 8-bit image, and supplies the quantized $\alpha$-fold original image to the calculating unit 55. Then, the process proceeds to step S15.

In step S15, the gradation converting unit 54 performs gradation conversion on the $\alpha$-fold original image supplied from the calculating unit 52 by using the dithering process, and supplies a gradation-converted $\alpha$-fold original image obtained thereby to the calculating unit 55. Then, the process proceeds to step S16.

In step S16, the calculating unit 55 calculates a difference between the gradation-converted $\alpha$-fold original image supplied from the gradation converting unit 54 and the quantized $\alpha$-fold original image supplied from the quantizing unit 53, thereby obtaining a high-frequency component in the gradation-converted $\alpha$-fold original image for the coefficient $\alpha$ set in step S12, and outputs the high-frequency component.

Then, the process proceeds from step S16 to step S17, where the image generating apparatus 41 determines whether the high-frequency component for all of the one or more predetermined values of coefficients $\alpha$ has been obtained.

If it is determined in step S17 that the high-frequency component for all of the one or more predetermined values of coefficients $\alpha$ has not been obtained, the process returns to step S12. In step S12, the coefficient setting unit 51 newly sets, as a coefficient $\alpha$, a value that has not yet been set as the coefficient $\alpha$ among the one or more predetermined values. Thereafter, the same process is repeated.

On the other hand, if it is determined in step S17 that the high-frequency component for all of the one or more predetermined values of coefficients $\alpha$ has been obtained, the process proceeds to step S18, where the image generating apparatus 41 outputs data to be blended.

Specifically, the image generating apparatus 41 outputs, as data to be blended, a set of the 8-bit quantized image of the menu screen output from the quantizing unit 56 and the high-frequency component output for all of the one or more predetermined values of coefficients $\alpha$ from the calculating unit 55.

Configuration of the TV 42

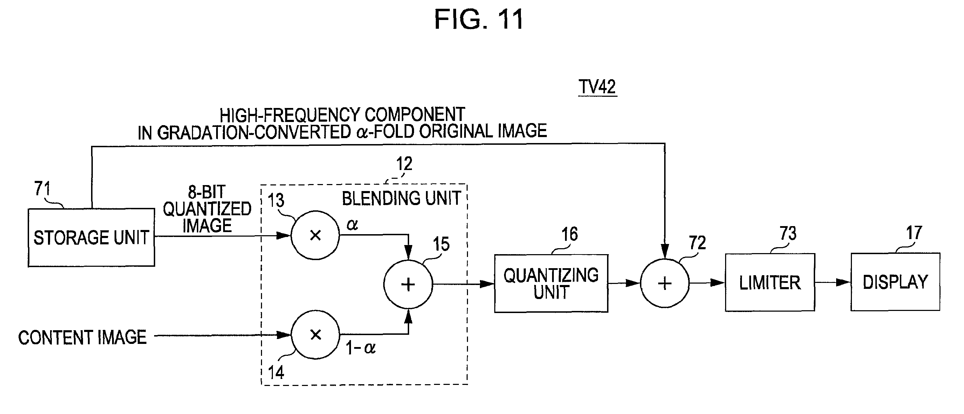

Fig. 11 illustrates an exemplary configuration of the TV 42 in Fig. 6.

In Fig. 11, the parts corresponding to those in Fig. 1 are denoted by the same reference numerals, and the description thereof is appropriately omitted.

Referring to Fig. 11, the TV 42 is common to the TV in Fig. 1 in including the blending unit 12, the quantizing unit 16, and the display 17. However, the TV 42 is different from the TV in Fig. 1 in that a storage unit 71 is provided instead of the storage unit 11 and that a calculating unit 72 and a limiter 73 are newly provided.

The storage unit 71 stores data to be blended. That is, the data to be blended output from the image generating apparatus 41 (Fig. 7) is written in the storage unit 71 in a factory or the like where the TV 42 is manufactured.

The data to be blended stored in the storage unit 71 is supplied to the blending unit 12 and the calculating unit 72 when a user performs an operation to display the menu screen, for example.

Specifically, the 8-bit quantized image of the menu screen in the data to be blended stored in the storage unit 71 is supplied to the calculating unit 13 of the blending unit 12. On the other hand, the high-frequency component in the gradation-converted $\alpha$-fold original image in the data to be blended stored in the storage unit 71 is supplied to the calculating unit 72.

In the blending unit 12, $\alpha$ blending is performed as described above with reference to Fig. 1.

That is, the blending unit 12 performs $\alpha$ blending, thereby generating a composite image in which the 8-bit quantized image of the menu screen supplied from the storage unit 71 and a content image as another image are blended, and supplies the composite image to the quantizing unit 16.

Specifically, in the blending unit 12, the calculating unit 13 multiplies the 8-bit quantized image of the menu screen supplied from the storage unit 71 by a coefficient $\alpha$, and supplies a product obtained thereby to the calculating unit 15.

The calculating unit 14 multiplies the content image supplied from a tuner (not illustrated) by a coefficient 1-$\alpha$ and supplies a product obtained thereby to the calculating unit 15.

The calculating unit 15 adds the product supplied from the calculating unit 13 and the product supplied from the calculating unit 14, thereby generating a composite image in which the menu screen is superimposed on the content image, and supplies the composite image to the quantizing unit 16.

The quantizing unit 16 quantizes the composite image supplied from the calculating unit 15 of the blending unit 12 into an image of the number of bits that can be displayed on the display 17 in the subsequent stage, e.g., into an 8-bit image, and supplies a quantized composite image as an 8-bit composite image obtained through the quantization to the calculating unit 72.

The coefficient $\alpha$ used for the $\alpha$ blending in the blending unit 12 may be preset in the factory or the like of the TV 42, or may be set by a user by operating the TV 42.

The calculating unit 72 is supplied with, from the storage unit 71, the high-frequency component for the coefficient $\alpha$ used for the $\alpha$ blending in the blending unit 12 in the entire high-frequency component included in the data to be blended stored in the storage unit 71.

The calculating unit 72 adds the quantized composite image supplied from the quantizing unit 16 and the high-frequency component supplied from the storage unit 71, thereby generating a pseudo high-gradation image, in which the gradation level is high in a pseudo manner, and supplies the pseudo high-gradation image to the limiter 73.

The limiter 73 limits each pixel value of the pseudo high-gradation image supplied from the calculating unit 72 to the number of bits for an image that can be displayed on the display 17 in the subsequent stage, that is, to 8 bits, and supplies the image to the display 17.

That is, the quantized composite image supplied from the quantizing unit 16 to the calculating unit 72 is an 8-bit image, and the high-frequency component supplied from the storage unit 71 to the calculating unit 72 is 1 bit. Therefore, when the quantized composite image and the high-frequency component are added in the calculating unit 72, a pixel having a pixel value of 9 bits (pixel having a pixel value larger than $2^8-1$) may occur in the pseudo high-gradation image obtained through the addition.

The limiter 73 limits the pixel value of such a pixel to a maximum pixel value that can be expressed by 8 bits.

Images handled in the TV 42

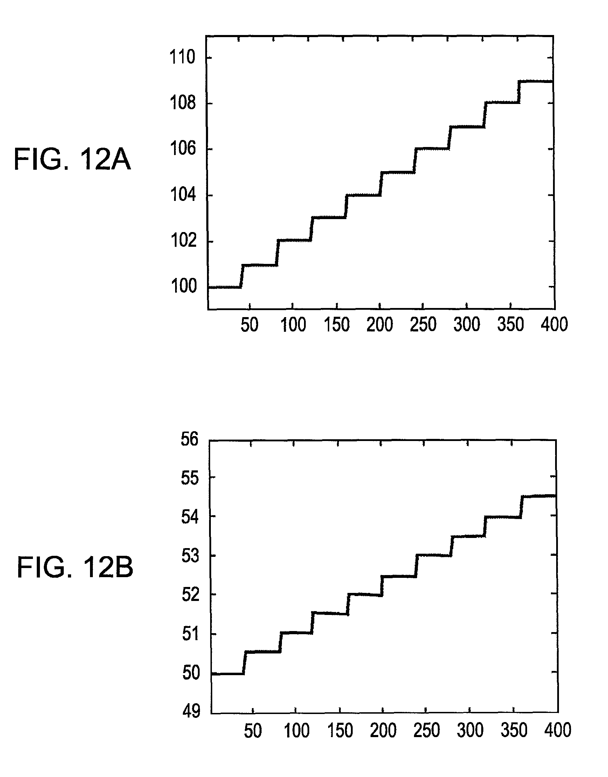

With reference to Figs. 12A to 14C, images handed in the TV 42 in Fig. 11 are described.

Figs. 12A and 12B illustrate 8-bit quantized images handed in the TV 42.

Specifically, Fig. 12A illustrates an 8-bit quantized image that is generated by quantizing the original image of the menu screen and that is included in the data to be blended stored in the storage unit 71 of the TV 42.

In the 8-bit quantized image in Fig. 12A, the pixel values of the first to four hundredth pixels from the left change stepwise from 100 to 109. The 8-bit quantized image in Fig. 12A is a 28-gradation image.

Fig. 12B illustrates an image obtained by multiplying the 8-bit quantized image in Fig. 12A by a coefficient $\alpha$ ($\alpha$-fold image) in the calculating unit 13 of the blending unit 12 (Fig. 11).

Specifically, Fig. 12B illustrates an $\alpha$-fold image of the menu screen obtained in the calculating unit 13 when the coefficient $\alpha$ is set to 0.5, for example.

In the $\alpha$-fold image in Fig. 12B, the pixel values of the first to four hundredth pixels from the left change stepwise from 50 to 54.5, 0.5 (= $\alpha$) times the 100 to 109 in Fig. 12A, and thus the gradation level thereof is equivalent to that of the 8-bit quantized image in Fig. 12A.

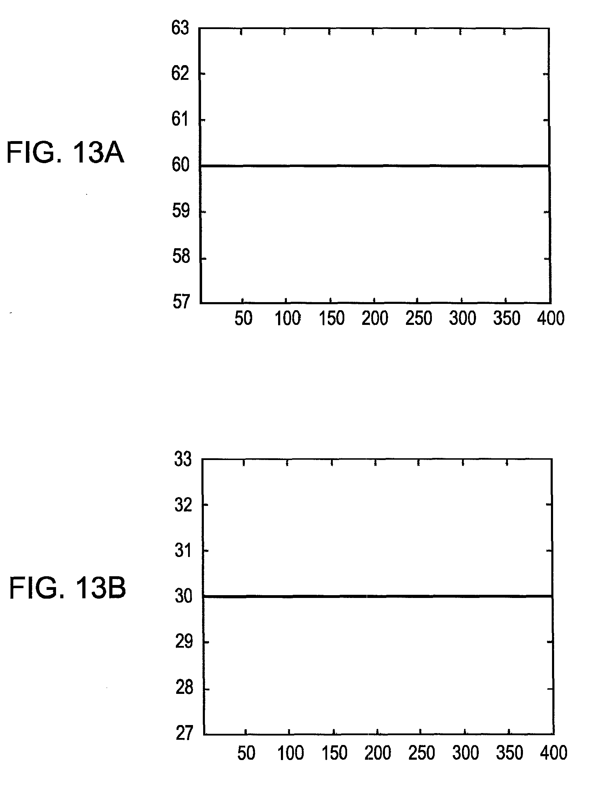

Figs. 13A and 13B illustrate content images.

Specifically, Fig. 13A illustrates a content image supplied to the calculating unit 14 of the blending unit 12 (Fig. 11).

In the content image in Fig. 13A, the pixel values of the first to four hundredth pixels from the left are constant at 60.

Fig. 13B illustrates an image obtained by multiplying the content image in Fig. 13A by a coefficient 1-$\alpha$ (1-$\alpha$-fold image) in the calculating unit 14 (Fig. 11).

That is, Fig. 13B illustrates a 1-$\alpha$-fold image obtained in the calculating unit 14 when the coefficient $\alpha$ is set to 0.5 as in the case illustrated in Fig. 12B.

In the 1-$\alpha$-fold image in Fig. 13B, the pixel values of the first to four hundredth pixels from the left are 30, 0.5 (= 1-$\alpha$) times the 60 in Fig. 13A.

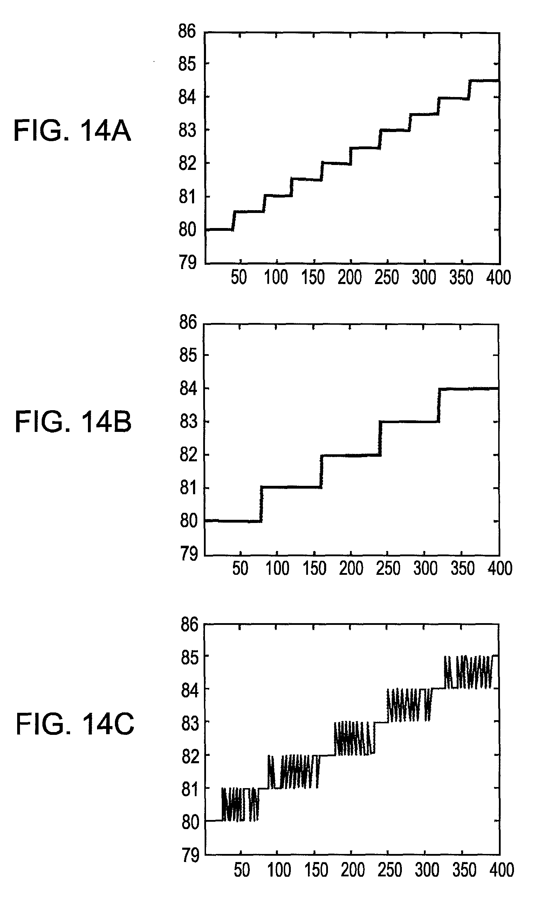

Figs. 14A to 14C illustrate a composite image, a quantized composite image, and a pseudo high-gradation image, respectively.

Fig. 14A illustrates a composite image obtained by adding the $\alpha$-fold image of the menu screen in Fig. 12B and the 1-$\alpha$-fold image of the content image in Fig. 13B in the calculating unit 15 of the blending unit 12 (Fig. 11).

That is, Fig. 14A illustrates a composite image obtained through $\alpha$ blending of the 8-bit quantized image of the menu screen in Fig. 12A and the content image in Fig. 13A, with the coefficient $\alpha$ being 0.5.

In the composite image in Fig. 14A, the pixel values of the first to four hundredth pixels from the left change stepwise from 80 to 84.5, resulting from the addition of the $\alpha$-fold image in Fig. 12B, in which the pixel values of the first to four hundredth pixels from the left change stepwise from 50 to 54.5, and the 1-$\alpha$-fold image in Fig. 13B, in which the pixel values of the first to four hundredth pixels from the left are constant at 30. Accordingly, the gradation level of the composite image in Fig. 14A is equivalent to that of the 8-bit quantized image in Fig. 12A.

Fig. 14B illustrates a quantized composite image obtained by quantizing the composite image in Fig. 14A into 8 bits in the quantizing unit 16.

In the quantized composite image in Fig. 14B, the pixel values of the first to four hundredth pixels from the left change stepwise with larger steps from 80 to 84, and the gradation level thereof is lower than that of the 8-bit quantized image in Fig. 12A.

That is, the $\alpha$-fold image in Fig. 12B used to generate a composite image is an image obtained by multiplying the 8-bit quantized image in Fig. 12A by 0.5 (= 2-1) as a coefficient $\alpha$. When (a composite image generated by using) such an $\alpha$-fold image is quantized into 8 bits, the quantized composite image obtained through the quantization is substantially a 27-gradation image. Therefore, the gradation level becomes lower than that (28-gradation) of the 8-bit quantized image in Fig. 12A.

Fig. 14C illustrates a pseudo high-gradation image obtained by adding the quantized composite image in Fig. 14B and the high-frequency component in Fig. 9D included in the data to be blended stored in the storage unit 71 by the calculating unit 72 (Fig. 11).

In the pseudo high-gradation image in Fig. 14C, the pixel values change in the manner as if PWM is performed due to the addition of the high-frequency component, and it looks like the pixel values smoothly change due to a visual space integration effect.

That is, as described above with reference to Fig. 9D, the high-frequency component in Fig. 9D is a gradation-level increasing component that allows the gradation level of the gradation-converted $\alpha$-fold original image in Fig. 9B to be (perceived as) equivalent to that of the original image of the menu screen in a pseudo manner.

Such a gradation-level increasing component is added to the quantized composite image in Fig. 14B, whereby, according to the pseudo high-gradation image obtained as a result of the addition, a gradation level equivalent to that of the original image of the menu screen (here, 216-gradation) is realized in a pseudo manner.

Process performed by the TV 42

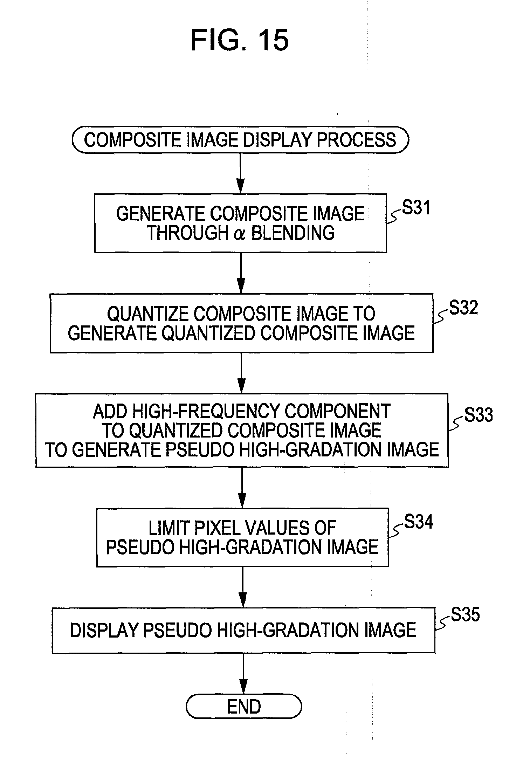

With reference to Fig. 15, a process of displaying an image in which a menu screen is superimposed on a content image (composite image display process) performed by the TV 42 in Fig. 11 is described.

The composite image display process starts when a user performs an operation to display the menu screen, for example.

In the composite image display process, the blending unit 12 performs $\alpha$ blending to generate a composite image in which an 8-bit quantized image and a content image are blended, and supplies the composite image to the quantizing unit 16 in step S31. Then, the process proceeds to step S32.

Specifically, when the user performs an operation to display the menu screen, the 8-bit quantized image of the menu screen in the data to be blended stored in the storage unit 17 is supplied to the blending unit 12. Furthermore, the high-frequency component in the gradation-converted $\alpha$-fold original image in the data to be blended stored in the storage unit 71 is supplied to the calculating unit 72.

The blending unit 12 performs $\alpha$ blending of the 8-bit quantized image of the menu screen supplied from the storage unit 71 and the content image supplied from the tuner (not illustrated) and supplies a composite image obtained thereby to the quantizing unit 16.

In step S32, the quantizing unit 16 quantizes the composite image supplied from the calculating unit 15 of the blending unit 12 into 8 bits, which is the number of bits of an image that can be displayed on the display 17 in the subsequent stage. Then, the quantizing unit 16 supplies a quantized composite image, which is an 8-bit composite image obtained through the quantization, to the calculating unit 72. Then, the process proceeds from step S32 to step S33.

In step S33, the calculating unit 72 adds the quantized composite image supplied from the quantizing unit 16 and the high-frequency component supplied from the storage unit 71, thereby generating a pseudo high-gradation image, and supplies the pseudo high-gradation image to the limiter 73. Then, the process proceeds to step S34.

In step S34, the limiter 73 limits the pixel values of the pseudo high-gradation image supplied from the calculating unit 72 and supplies the image to the display 17. Then, the process proceeds to step S35.

In step S35, the display 17 displays the pseudo high-gradation image supplied from the limiter 73, whereby the composite image display process ends.

As described above, the TV 42 performs $\alpha$ blending of blending images by using the coefficient $\alpha$ as a weight, thereby generating a composite image in which the quantized image (8-bit quantized image) generated by quantizing the original image of the menu screen and the content image as another image are blended, and quantizes the composite image. Then, the TV 42 adds a quantized composite image obtained through the quantization and a predetermined high-frequency component, thereby generating a pseudo high-gradation image having a high gradation level in a pseudo manner.

The predetermined high-frequency component is obtained in the following way. In the image generating apparatus 41, the $\alpha$-fold original image, which is a product of the coefficient $\alpha$ and the original image of the menu screen, is generated and is quantized, and gradation conversion of the quantized $\alpha$-fold original image obtained through the quantization is performed by using the dithering process, whereby a gradation-converted $\alpha$-fold original image is generated. Then, a difference between the gradation-converted $\alpha$-fold original image and the quantized $\alpha$-fold original image is calculated, whereby the predetermined high frequency component is obtained.

Therefore, according to the pseudo high-gradation image that is generated by adding the high-frequency component and the quantized composite image in the TV 42, a gradation level equivalent to that of the original image of the menu screen can be realized in a pseudo manner.

That is, in a case where $\alpha$ blending is performed on a quantized image obtained by quantizing the original image of the menu screen, a high-gradation image approximate to the original image can be obtained.

Furthermore, in the TV 42, generation of the pseudo high-gradation image is performed through addition of the quantized composite image and the high frequency component, and a feedback process is not performed unlike in the $\Delta\Sigma$ modulator in Fig. 4.

Therefore, the process of generating the pseudo high-gradation image can be performed in a pipeline, so that the speed of the process can be increased.

That is, in the TV 42, in a case where addition of a quantized composite image and a high-frequency component is performed in the raster scanning order, addition for a pixel can be started immediately after addition for the preceding pixel ends.

In the image generating apparatus 41 (Fig. 7), a dithering process based on the error diffusion method is performed by the gradation converting unit 54. However, a dithering process based on the dither method, not based on the error diffusion method, can also be performed. Note that, if the dither method is used, the image quality degrades due to noticeable noise in a pseudo high-gradation image, compared to the case of using the error diffusion method.

In the image processing system in Fig. 6, the process can be performed on an image of the real world as well as an image serving as a UI (User Interface), such as the image (original image) of the menu screen.

Furthermore, in the image processing system in Fig. 6, the process can be performed on either of a still image and a moving image.

Specific examples of the filter 66

Now, the filter 66 included in the gradation converting unit 54 in Fig. 8 will be described.

As the filter 66 (Fig. 8) of the gradation converting unit 54, a noise shaping filter used in the error diffusion method according to a related art can be adopted.

Examples of the noise shaping filter used in the error diffusion method according to the related art include a Jarvis, Judice & Ninke filter (hereinafter referred to as Jarvis filter) and a Floyd & Steinberg filter (hereinafter referred to as Floyd filter).

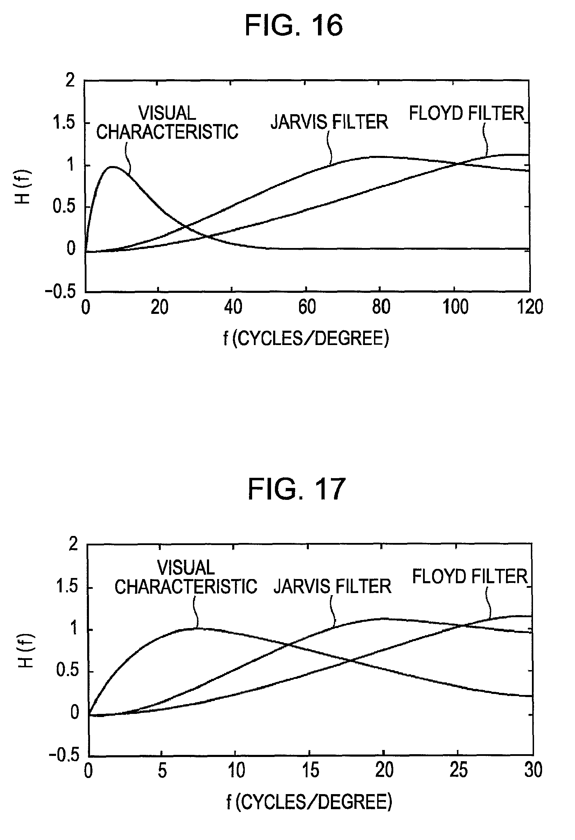

Fig. 16 illustrates an amplitude characteristic of noise shaping using the Jarvis filter and an amplitude characteristic of noise shaping using the Floyd filter.

In Fig. 16, a contrast sensitivity curve indicating a spatial frequency characteristic of human vision (hereinafter also referred to as visual characteristic) is illustrated in addition to the amplitude characteristics of noise shaping.

In Fig. 16 (also in Figs. 17, 18, 20B, 21B, and 22B described below), the horizontal axis indicates the spatial frequency, whereas the vertical axis indicates the gain for the amplitude characteristic or the sensitivity for the visual characteristic.

Here, the unit of the spatial frequency is cpd (cycles/degree), which indicates the number of stripes that are seen in the range of a unit angle of view (one degree in the angle of view). For example, 10 cpd means that ten pairs of a white line and a black line are seen in the range of one degree in the angle of view, and 20 cpd means that twenty pairs of a white line and a black line are seen in the range of one degree in the angle of view.

The high-frequency component in the gradation-converted $\alpha$-fold original image that is generated by using the gradation-converted $\alpha$-fold original image obtained in the gradation converting unit 54 is eventually used to generate a pseudo high-gradation image to be displayed on the display 17 of the TV 42 (Fig. 11). Thus, from the viewpoint of improving the quality of the image to be displayed on the display 17 (pseudo high-gradation image), it is sufficient to consider up to a maximum spatial frequency of the image displayed on the display 17 (from 0 cpd) for the spatial frequency characteristic of human vision.

If the maximum spatial frequency of the image displayed on the display 17 is very high, e.g., about 120 cpd, noise (quantization error) is sufficiently modulated (noise shaping is performed) to a high range of a frequency band where the sensitivity of human vision is low by either of the Jarvis filter and the Floyd filter, as illustrated in Fig. 16.

The maximum spatial frequency of the image displayed on the display 17 depends on the resolution of the display 17 and the distance between the display 17 and a viewer who views the image displayed on the display 17 (hereinafter referred to as viewing distance).

Here, assume that the length in the vertical direction of the display 17 is H inches. In this case, about 2.5 H to 3.0 H is adopted as the viewing distance to obtain the maximum spatial frequency of the image displayed on the display 17.

In this case, for example, when the display 17 has a 40-inch display screen, having 1920 horizontal $\times$ 1080 vertical pixels, for displaying a so-called full HD (High Definition) image, the maximum spatial frequency of the image displayed on the display 17 is about 30 cpd.

Fig. 17 illustrates an amplitude characteristic of noise shaping using the Jarvis filter and an amplitude characteristic of noise shaping using the Floyd filter in a case where the maximum spatial frequency of the image displayed on the display 17 (Fig. 11) is about 30 cpd.

Fig. 17 also illustrates a visual characteristic, as in Fig. 16.

As illustrated in Fig. 17, in the case where the maximum spatial frequency of the image displayed on the display 17 is about 30 cpd, it is difficult for the Jarvis filter and the Floyd filter to sufficiently modulate noise to a high range of the frequency band where the sensitivity of human vision is sufficiently low.

Therefore, when the Jarvis filter or the Floyd filter is used, noise may be noticeable in a pseudo high-gradation image generated by using the high-frequency component in the gradation-converted $\alpha$-fold original image obtained through gradation conversion performed by the gradation converting unit 54, so that the perceived image quality thereof may be degraded.

When noise is noticeable in a pseudo high-gradation image generated by using the high-frequency component in the gradation-converted $\alpha$-fold original image and when the perceived image quality is degraded, noise is noticeable also in the gradation-converted $\alpha$-fold original image itself and the perceived image quality thereof is degraded.

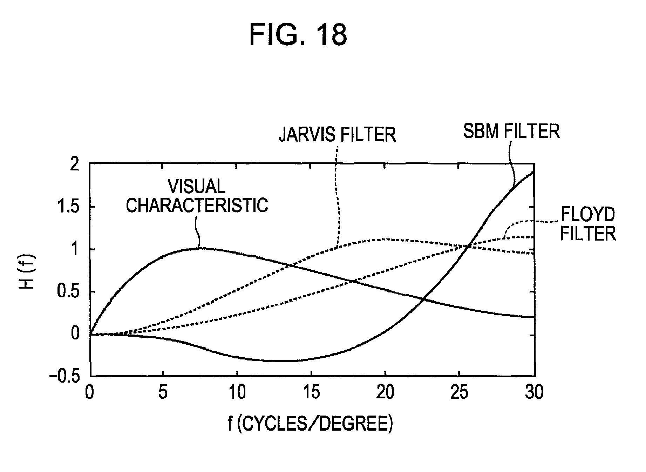

In order to suppress degradation of the perceived image quality due to noticeable noise in the gradation-converted $\alpha$-fold original image obtained through gradation conversion performed by the gradation converting unit 54, the amplitude characteristic of noise shaping illustrated in Fig. 18 is necessary.

That is, Fig. 18 illustrates an example of an amplitude characteristic of noise shaping for suppressing degradation of a perceived image quality (hereinafter referred to as degradation suppressing noise shaping) due to noticeable noise in the gradation-converted $\alpha$-fold original image.

Here, a noise shaping filter used for $\Delta\Sigma$ modulation to realize the degradation suppressing noise shaping is also called an SBM (Super Bit Mapping) filter.

Fig. 18 illustrates the visual characteristic, the amplitude characteristic of noise shaping using the Jarvis filter, and the amplitude characteristic of noise shaping using the Floyd filter illustrated in Fig. 17, in addition to the amplitude characteristic of the degradation suppressing noise shaping (noise shaping using the SBM filter).

In the amplitude characteristic of the degradation suppressing noise shaping, the characteristic curve in a midrange and higher has an upside-down shape (including a similar shape) of the visual characteristic curve (contrast sensitivity curve). Hereinafter, such a characteristic is called a reverse characteristic.

Furthermore, in the amplitude characteristic of the degradation suppressing noise shaping, the gain increases in a high range more steeply compared to that in the amplitude characteristic of noise shaping using the Jarvis filter or the Floyd filter.

Accordingly, in the degradation suppressing noise shaping, noise (quantization error) is modulated to a higher range where visual sensitivity is lower in a concentrated manner, compared to the noise shaping using the Jarvis filter or the Floyd filter.

By adopting the SBM filter as the filter 66 (Fig. 8), that is, by setting filter coefficients of the filter 66 so that the amplitude characteristic of noise shaping using the filter 66 has a reverse characteristic of the visual characteristic in the midrange and higher and that the gain increases in the high range more steeply compared to that in the amplitude characteristic of noise shaping based on $\Delta\Sigma$ modulation using the Floyd filter or the Jarvis filter, noise (quantization error) in the high range where the visual sensitivity is low is added to the pixel value IN in the calculating unit 61 (Fig. 8). As a result, noise (quantization error) in the gradation-converted $\alpha$-fold original image can be prevented from being noticeable.

In the amplitude characteristic of noise shaping using the SBM filter illustrated in Fig. 18, the gain is well over 1 in the high range. This means that the quantization error is amplified more significantly in the high range compared to the case where the Jarvis filter or the Floyd filter is used.

Also, in the amplitude characteristic of noise shaping using the SBM filter illustrated in Fig. 18, the gain is negative in a low range to the midrange. Accordingly, the SBM filter can be constituted by a two-dimensional filter having a small number of taps.

That is, in a case of realizing an amplitude characteristic in which the gain is 0 in the low range and midrange and the gain steeply increases only in the high range as the amplitude characteristic of noise shaping using the SBM filter, the SBM filter is a two-dimensional filter having many taps (the number of taps is large).

On the other hand, in a case of realizing an amplitude characteristic of noise shaping using the SBM filter in which the gain is negative in the low range or midrange, the SBM filter can be constituted by a two-dimensional filter having a small number of taps, and the gain in the high range of the noise shaping can be increased more steeply compared to the case of using the Jarvis filter or the Floyd filter.

Adopting such an SBM filter as the filter 66 enables the gradation converting unit 54 to be miniaturized.

Exemplary configuration of the filter 66

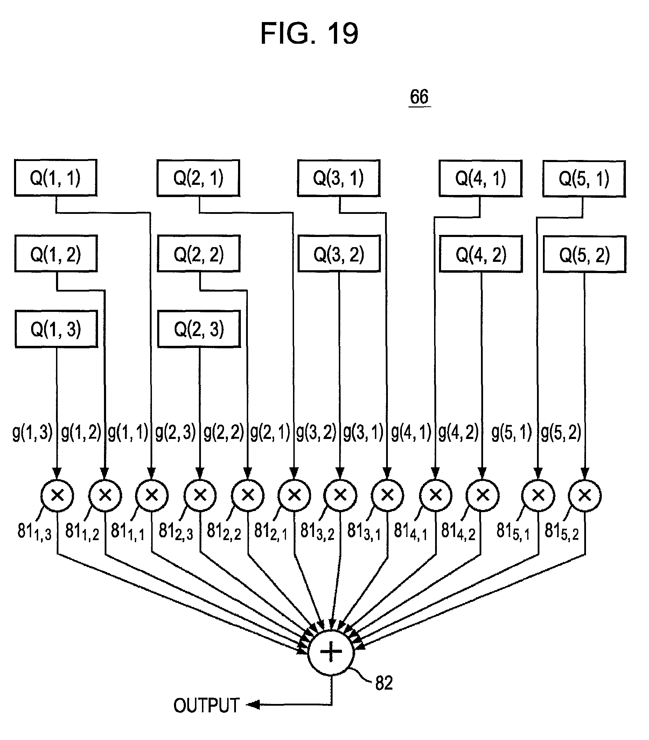

Fig. 19 illustrates an exemplary configuration of the filter 66 in Fig. 8.

Referring to Fig. 19, the filter 66 is a two-dimensional FIR filter having twelve taps, and includes twelve calculating units 811, 3, 811, 2, 811, 1, 812, 3, 812, 2, 812, 1, 813, 2, 813, 1, 814, 1, 814, 2, 815, 1, and 815, 2, and a calculating unit 82.

Now, assume that a quantization error of the pixel x-th from the left and $\gamma$-th from the top among 5 horizontal $\times$ 5 vertical pixels, with a target pixel being at the center, is represented by Q(x, y). In this case, the quantization error Q(x, y) is supplied to the calculating unit 81x, y.

That is, in Fig. 19, the calculating units 81x, y are supplied with quantization errors Q(x, y) of respective twelve pixels that are processed before a target pixel (regarded as a target pixel) in the raster scanning order among 5 horizontal $\times$ 5 vertical pixels, with the target pixel being at the center.

The calculating units 81x, y multiply the quantization errors Q(x, y) supplied thereto by preset filter coefficients g(x, y) and supply products obtained thereby to the calculating unit 82.

The calculating unit 82 adds the products supplied from the twelve calculating units 81x, y and outputs the sum as a result of filtering of quantization errors to the calculating unit 61 (Fig. 8).

The calculating unit 61 in Fig. 8 adds the pixel value IN of a target pixel and the result of filtering obtained by using the quantization errors Q(x, y) of the respective twelve pixels that are processed before the target pixel in the raster scanning order among the 5x5 pixels, with the target pixel being at the center.

Specific examples of filter coefficients and noise shaping characteristic

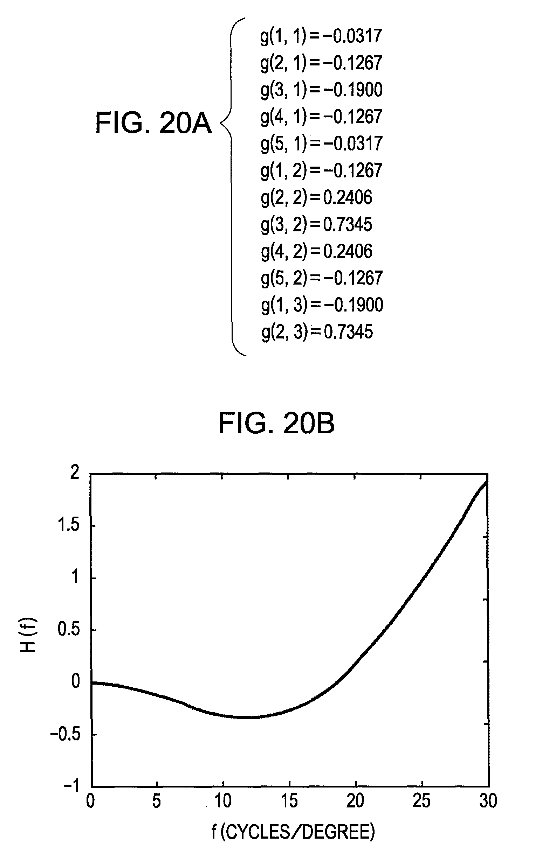

Figs. 20A and 20B illustrate a first example of filter coefficients and an amplitude characteristic of noise shaping using the SBM filter in a case where the maximum spatial frequency of the image displayed on the display 17 is 30 cpd.

Specifically, Fig. 20A illustrates a first example of filter coefficients of the 12-tap SBM filter, the filter coefficients being determined so that the gain in the amplitude characteristic of noise shaping is negative in the low range or midrange and increases in the high range more steeply compared to that in the amplitude characteristic of noise shaping based on $\Delta\Sigma$ modulation using the Floyd filter.

In Fig. 20A, filter coefficients g(1, 1) = -0.0317, g(2, 1) = -0.1267, g(3, 1) = -0.1900, g(4, 1) = -0.1267, g (5, 1) = -0.0317, g(1, 2) = -0.1267, g(2, 2) = 0.2406, g(3, 2) = 0.7345, g(4, 2) = 0.2406, g(5, 2) = -0.1267, g(1, 3) = -0.1900, and g(2, 3) = 0.7345 are adopted as the filter coefficients g(x, y) of the filter 66 (Fig. 19), which is a 12-tap SBM filter.

Fig. 20B illustrates an amplitude characteristic of noise shaping using the SBM filter in a case where the SBM filter has the filter coefficients illustrated in Fig. 20A.

In the amplitude characteristic of noise shaping in Fig. 20B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter (and the Jarvis filter).

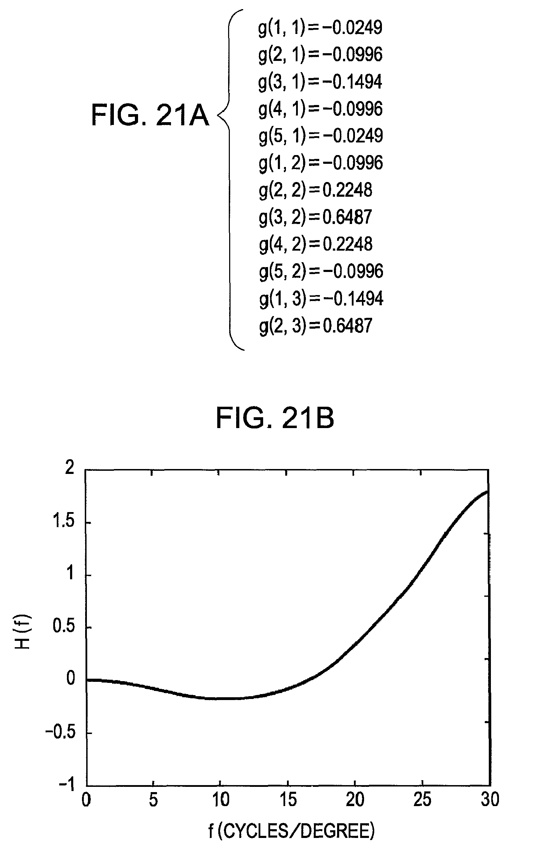

Figs. 21A and 21B illustrate a second example of filter coefficients and an amplitude characteristic of noise shaping using the SBM filter in a case where the maximum spatial frequency of the image displayed on the display 17 is 30 cpd.

Specifically, Fig. 21A illustrates a second example of filter coefficients of the 12-tap SBM filter, the filter coefficients being determined so that the gain in the amplitude characteristic of noise shaping is negative in the low range or midrange and increases in the high range more steeply compared to that in the amplitude characteristic of noise shaping based on $\Delta\Sigma$ modulation

using the Floyd filter.

In Fig. 21A, filter coefficients g(1, 1) = -0.0249, g(2, 1) = -0.0996, g(3, 1) = -0.1494, g(4, 1) = -0.0996, g (5, 1) = -0.0249, g(1, 2) = -0.0996, g(2, 2) = 0.2248, g(3, 2) = 0.6487, g(4, 2) = 0.2248, g(5, 2) = -0.0996, g(1, 3) = -0.1494, and g(2, 3) = 0.6487 are adopted as the filter coefficients g(x, y) of the filter 66 (Fig. 19), which is a 12-tap SBM filter.

Fig. 21B illustrates an amplitude characteristic of noise shaping using the SBM filter in a case where the SBM filter has the filter coefficients illustrated in Fig. 21A.

In the amplitude characteristic of noise shaping in Fig. 21B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter.

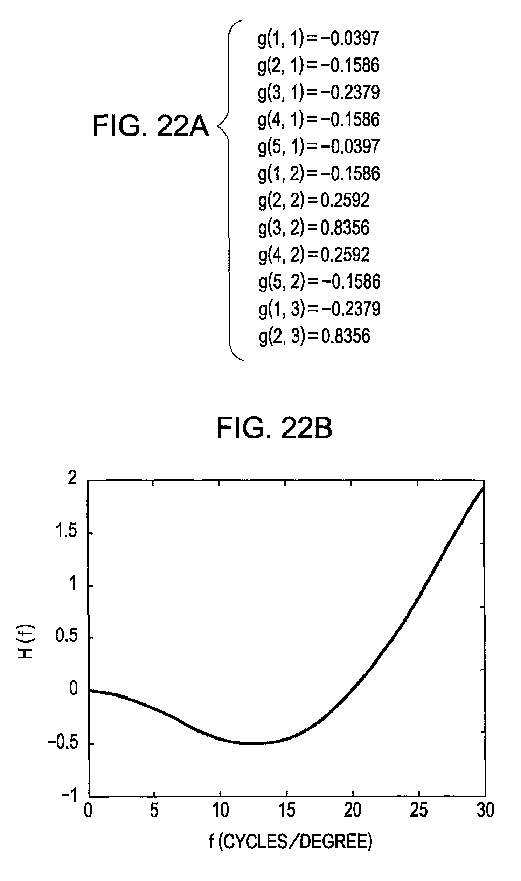

Figs. 22A and 22B illustrate a third example of filter coefficients and an amplitude characteristic of noise shaping using the SBM filter in a case where the maximum spatial frequency of the image displayed on the display 17 is 30 cpd.

Specifically, Fig. 22A illustrates a third example of filter coefficients of the 12-tap SBM filter, the filter coefficients being determined so that the gain in the amplitude characteristic of noise shaping is negative in the low range or midrange and increases in the high range more steeply compared to that in the amplitude characteristic of noise shaping based on $\Delta\Sigma$ modulation using the Floyd filter.

In Fig. 22A, filter coefficients g(1, 1) = -0.0397, g(2, 1) = -0.1586, g(3, 1) = -0.2379, g(4, 1) = -0.1586, g (5, 1) = -0.0397, g(1, 2) = -0.1586, g(2, 2) = 0.2592, g(3, 2) = 0.8356, g(4, 2) = 0.2592, g(5, 2) = -0.1586, g(1, 3) = -0.2379, and g(2, 3) = 0.8356 are adopted as the filter coefficients g(x, y) of the filter 66 (Fig. 19), which is a 12-tap SBM filter.

Fig. 22B illustrates an amplitude characteristic of noise shaping using the SBM filter in a case where the SBM filter has the filter coefficients illustrated in Fig. 22A.

In the amplitude characteristic of noise shaping in Fig. 22B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter.

The filter coefficients of the 12-tap SBM filter illustrated in Figs. 20A, 21A, and 22A include negative values, and thus the gain in the amplitude characteristic of noise shaping is negative in the low range or midrange. In this way, by allowing the gain in the amplitude characteristic of noise shaping to be negative in the low range or midrange, the amplitude characteristic of noise shaping in which the gain steeply increases in the high range can be realized by an SBM filter having a small number of taps, such as 12 taps.

Additionally, according to a simulation that was performed by using SBM filters having the filter coefficients illustrated in Figs. 20A, 21A, and 22A as the filter 66, a gradation-converted $\alpha$-fold original image and a pseudo high-gradation image having a high perceived quality could be obtained in all of the SBM filters.

Another exemplary configuration of the filter 66

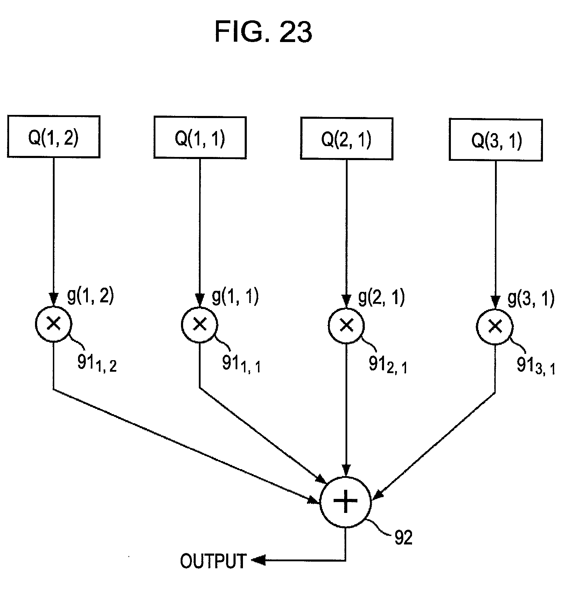

Fig. 23 illustrates another exemplary configuration of the filter 66 in Fig. 8.

Referring to Fig. 23, the filter 66 is a two-dimensional FIR filter having four taps, and includes four calculating units 911, 2, 911, 1, 912, 1, and 913, 1, and a calculating unit 92.

Now, assume that a quantization error of the pixel x-th from the left and y-th from the top among 3 horizontal $\times$ 3 vertical pixels, with a target pixel being at the center, is represented by Q(x, y). In this case, the quantization error Q(x, y) is supplied to the calculating unit 91x, y.

That is, in Fig. 23, the calculating units 91x, y are supplied with quantization errors Q(x, y) of respective four pixels that are processed before a target pixel (regarded as a target pixel) in the raster scanning order among 3 horizontal $\times$ 3 vertical pixels, with the target pixel being at the center.

The calculating units 91x, y multiply the quantization errors Q(x, y) supplied thereto by preset filter coefficients g(x, y) and supply products obtained thereby to the calculating unit 92.

The calculating unit 92 adds the products supplied from the four calculating units 91x, y and outputs the sum as a result of filtering of quantization errors to the calculating unit 61 (Fig. 8).

The calculating unit 61 in Fig. 8 adds the pixel value IN of a target pixel and the result of filtering obtained by using the quantization errors Q(x, y) of the respective four pixels that are processed before the target pixel in the raster scanning order among the 3x3 pixels, with the target pixel being at the center.

In Fig. 23, filter coefficients g(1, 1) = 1/16, g(2, 1) = 5/16, g(3, 1) = 3/16, and g(1, 2) = 7/16 can be adopted as filter coefficients of the filter 66 having four taps.

Exemplary configuration of a computer according to an embodiment of the present invention

The above-described series of processes can be performed by either of hardware and software. When the series of processes are performed by software, a program constituting the software is installed to a multi-purpose computer or the like.

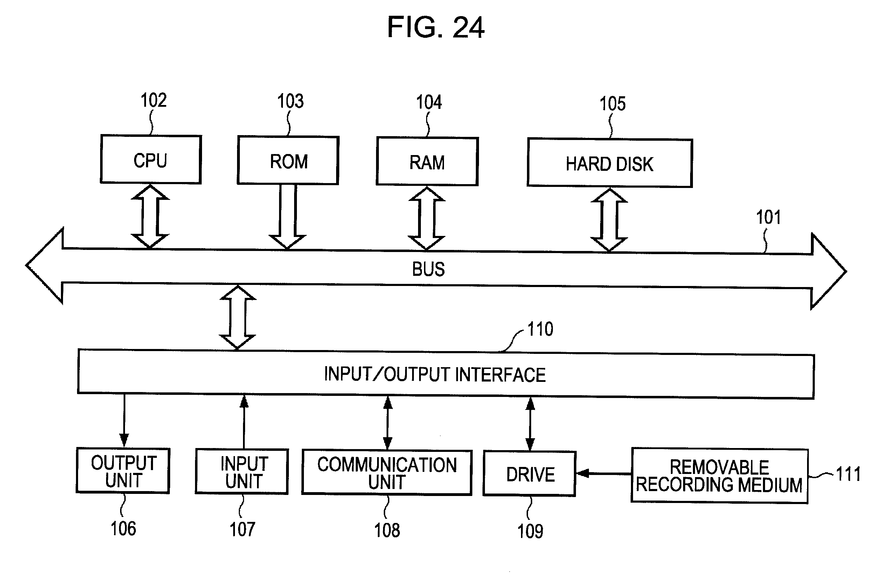

Fig. 24 illustrates an exemplary configuration of a computer to which the program for executing the above-described series of processes is installed according to an embodiment.

The program can be recorded in advance in a hard disk 105 or a ROM (Read Only Memory) 103 serving as a recording medium mounted in the computer.

Alternatively, the program can be stored (recorded) temporarily or permanently in a removable recording medium 111, such as a flexible disk, a CD-ROM (Compact Disc Read Only Memory), an MO (Magneto Optical) disc, a DVD (Digital Versatile Disc), a magnetic disk, or a semiconductor memory. The removable recording medium 111 can be provided as so-called package software.

The program can be installed to the computer via the above-described removable recording medium 111. Also, the program can be transferred to the computer from a download site via an artificial satellite for digital satellite broadcast in a wireless manner, or can be transferred to the computer via a network such as a LAN (Local Area Network) or the Internet in a wired manner. The computer can receive the program transferred in that manner by using a communication unit 108 and can install the program to the hard disk 105 mounted therein.

The computer includes a CPU (Central Processing Unit) 102. An input/output interface 110 is connected to the CPU 102 via a bus 101. When a command is input to the CPU 102 by a user operation of an input unit 107 including a keyboard, a mouse, and a microphone via the input/output interface 110, the CPU 102 executes the program stored in the ROM 103 in response to the command. Alternatively, the CPU 102 loads, to a RAM (Random Access Memory) 104, the program stored in the hard disk 105, the program transferred via a satellite or a network, received by the communication unit 108, and installed to the hard disk 105, or the program read from the removable recording medium 111 loaded into a drive 109 and installed to the hard disk 105, and executes the program. Accordingly, the CPU 102 performs the process in accordance with the above-described flowchart or the process performed by the above-described configurations illustrated in the block diagrams. Then, the CPU 102 allows an output unit 106 including an LCD (Liquid Crystal Display) and a speaker to output, allows the communication unit 108 to transmit, or allows the hard disk 105 to record a processing result via the input/output interface 110 as necessary.

In this specification, the process steps describing the program allowing the computer to execute various processes are not necessarily performed in time series along the order described in a flowchart, but may be performed in parallel or individually (e.g., a parallel process or a process by an object is acceptable).

The program may be processed by a single computer or may be processed in a distributed manner by a plurality of computers. Furthermore, the program may be executed by being transferred to a remote computer.

The present application contains subject matter related to that disclosed in Japanese Priority Patent Application JP 2008-277701 filed in the Japan Patent Office on October 29, 2008.

Embodiments of the present invention are not limited to the above-described embodiments. It should be understood by those skilled in the art that various modifications, combinations, sub-combinations and alterations may occur depending on design requirements and other factors insofar as they are within the scope of the appended claims or the equivalents thereof.

**Claims**

1. An image processing apparatus comprising:

   multiplying means (52) for multiplying an original image by a predetermined coefficient $\alpha$ used for $\alpha$ blending of blending images with use of the coefficient $\alpha$ as a weight, thereby generating an $\alpha$-fold original image, which is the original image in which pixel values are multiplied by $\alpha$;
   quantizing means (53) for quantizing the $\alpha$-fold original image and outputting a quantized $\alpha$-fold original image obtained through the quantization;
   gradation converting means (54) for performing gradation conversion on the $\alpha$-fold original image by performing a dithering process of quantizing the image after adding noise to the image, thereby generating a gradation-converted $\alpha$-fold original image, which is the $\alpha$-fold original image after gradation conversion; and
   difference calculating means (55) for calculating a difference between the gradation-converted $\alpha$-fold original image and the quantized $\alpha$-fold original image, thereby obtaining a high-frequency component in the gradation-converted $\alpha$-fold original image, the high-frequency component being added to a quantized composite image, which is generated by quantizing a composite image obtained through $\alpha$ blending with a quantized image generated by quantizing the original image.

2. The image processing apparatus according to Claim 1, further comprising:

   limiting means (64) for limiting pixel values of the gradation-converted $\alpha$-fold original image so that the high-frequency component is a value expressed by one bit.

3. The image processing apparatus according to Claim 1, wherein the predetermined coefficient $\alpha$ includes a plurality of values and the high-frequency component in the gradation-converted $\alpha$-fold original image is obtained for each of the plurality of values.

4. An image processing method for an image processing apparatus, the image processing method comprising the steps of:

   multiplying an original image by a predetermined coefficient $\alpha$ used for $\alpha$ blending of blending images with use of the coefficient $\alpha$ as a weight, thereby generating an $\alpha$-fold original image, which is the original image in which pixel values are multiplied by $\alpha$;
   quantizing the $\alpha$-fold original image and outputting a quantized $\alpha$-fold original image obtained through the quantization;
   performing gradation conversion on the $\alpha$-fold original image by performing a dithering process of quantizing the image after adding noise to the image, thereby generating a gradation-converted $\alpha$-fold original image, which is the $\alpha$-fold original image after gradation conversion; and
   calculating a difference between the gradation-converted $\alpha$-fold original image and the quantized $\alpha$-fold original image, thereby obtaining a high-frequency component in the gradation-converted $\alpha$-fold original image, the high-frequency component being added to a quantized composite image, which is generated by quantizing a composite image obtained through $\alpha$ blending with a quantized image generated by quantizing the original image.

5. A program causing a computer to function as:

   multiplying means (52) for multiplying an original image by a predetermined coefficient $\alpha$ used for $\alpha$ blending of blending images with use of the coefficient $\alpha$ as a weight, thereby generating an $\alpha$-fold original image, which is the original image in which pixel values are multiplied by $\alpha$;
   quantizing means (53) for quantizing the $\alpha$-fold original image and outputting a quantized $\alpha$-fold original image obtained through the quantization;
   gradation converting means (54) for performing gradation conversion on the $\alpha$-fold original image by performing a dithering process of quantizing the image after adding noise to the image, thereby generating a gradation-converted $\alpha$-fold original image, which is the $\alpha$-fold original image after gradation conversion; and
   difference calculating means (55) for calculating a difference between the gradation-converted $\alpha$-fold original image and the quantized $\alpha$-fold original image, thereby obtaining a high-frequency component in the gradation-converted $\alpha$-fold original image, the high-frequency component being added to a quantized composite image, which is generated by quantizing a composite image obtained through $\alpha$ blending with a quantized image generated by quantizing the original image.

6. An image processing apparatus comprising:

blending means (12) for performing α blending of blending images with use of a predetermined coefficient α as a weight, thereby generating a composite image in which a quantized image generated by quantizing an original image and another image are blended;

quantizing means (16) for quantizing the composite image and outputting a quantized composite image obtained through the quantization; and

adding means (72) for adding the quantized composite image and a predetermined high-frequency component, thereby generating a pseudo high-gradation image having a pseudo high gradation level,

wherein the predetermined high-frequency component is a high-frequency component in a gradation-converted α-fold original image, the high-frequency component being obtained by

multiplying the original image by the predetermined coefficient α, thereby generating an α-fold original image, which is the original image in which pixel values are multiplied by α, quantizing the α-fold original image and outputting a quantized α-fold original image obtained through the quantization, performing gradation conversion on the α-fold original image by performing a dithering process of quantizing the image after adding noise to the image, thereby generating the gradation-converted α-fold original image, which is the α-fold original image after gradation conversion, and calculating a difference between the gradation-converted α-fold original image and the quantized α-fold original image.

7. The image processing apparatus according to Claim 6, further comprising:

storage means (71) for storing the quantized image and the high-frequency component in the gradation-converted α-fold original image, the predetermined coefficient α including a plurality of values, the high-frequency component in the gradation-converted α-fold original image being obtained for each of the plurality of values.

8. An image processing method for an image processing apparatus, the image processing method comprising the steps of:

performing α blending of blending images with use of a predetermined coefficient α as a weight, thereby generating a composite image in which a quantized image generated by quantizing an original image and another image are blended;

quantizing the composite image and outputting a quantized composite image obtained through the quantization; and

adding the quantized composite image and a predetermined high-frequency component, thereby generating a pseudo high-gradation image having a pseudo high gradation level,

wherein the predetermined high-frequency component is a high-frequency component in a gradation-converted α-fold original image, the high-frequency component being obtained by

multiplying the original image by the predetermined coefficient α, thereby generating an α-fold original image, which is the original image in which pixel values are multiplied by α, quantizing the α-fold original image and outputting a quantized α-fold original image obtained through the quantization, performing gradation conversion on the α-fold original image by performing a dithering process of quantizing the image after adding noise to the image, thereby generating the gradation-converted α-fold original image, which is the α-fold original image after gradation conversion, and calculating a difference between the gradation-converted α-fold original image and the quantized α-fold original image.

9. A program causing a computer to function as:

blending means (12) for performing α blending of blending images with use of a predetermined coefficient α as a weight, thereby generating a composite image in which a quantized image generated by quantizing an original image and another image are blended;

quantizing means (16) for quantizing the composite image and outputting a quantized composite image obtained through the quantization; and

adding means (72) for adding the quantized composite image and a predetermined high-frequency component, thereby generating a pseudo high-gradation image having a pseudo high gradation level,

wherein the predetermined high-frequency component is a high-frequency component in a gradation-converted α-fold original image, the high-frequency component being obtained by

multiplying the original image by the predetermined coefficient α, thereby generating an α-fold original image, which is the original image in which pixel values are multiplied by α, quantizing the α-fold original image and output-

ting a quantized $\alpha$-fold original image obtained through the quantization,

performing gradation conversion on the $\alpha$-fold original image by performing a dithering process of quantizing the image after adding noise to the image, thereby generating the gradation-converted $\alpha$-fold original image, which is the $\alpha$-fold original image after gradation conversion, and calculating a difference between the gradation-converted $\alpha$-fold original image and the quantized $\alpha$-fold original image.

FIG. 1

EP 2 182 735 A2

FIG. 2A

FIG. 2B

FIG. 2C

FIG. 2D

# FIG. 3

TV

STORAGE UNIT — 11

BLENDING UNIT — 12

13 ×　α

14 ×　1-α

CONTENT IMAGE

+ — 15

GRADATION CONVERTING UNIT — 21

DISPLAY — 17

EP 2 182 735 A2

EP 2 182 735 A2

# FIG. 4

# FIG. 5

23

FIG. 6

## FIG. 7

41

- 51 COEFFICIENT SETTING UNIT
- 52 ×  α
- 53 QUANTIZING UNIT
- 54 GRADATION CONVERTING UNIT
- 55 +
- 56 QUANTIZING UNIT

ORIGINAL IMAGE (16 BITS)

HIGH-FREQUENCY COMPONENT (1 BIT)

8-BIT QUANTIZED IMAGE

DATA TO BE BLENDED

# FIG. 8

FIG. 9A

FIG. 9B

FIG. 9C

FIG. 9D

# FIG. 10

```
( IMAGE GENERATING PROCESS )
            │
            ▼
┌─────────────────────────────────────────┐
│ QUANTIZE ORIGINAL IMAGE INTO 8-BIT IMAGE │ ⟋S11
│   TO GENERATE 8-BIT QUANTIZED IMAGE      │
└─────────────────────────────────────────┘
            │
            ▼  ◄────────────────────────────┐
┌─────────────────────────┐                 │
│    SET COEFFICIENT α     │ ⟋S12           │
└─────────────────────────┘                 │
            │                               │
            ▼                               │
┌─────────────────────────────────┐         │
│   MULTIPLY ORIGINAL IMAGE BY α   │ ⟋S13   │
│  TO GENERATE α-FOLD ORIGINAL IMAGE│        │
└─────────────────────────────────┘         │
            │                               │
            ▼                               │
┌───────────────────────────────────────────┐ │
│ QUANTIZE α-FOLD ORIGINAL IMAGE INTO 8-BIT IMAGE │ ⟋S14 │
│  TO GENERATE QUANTIZED α-FOLD ORIGINAL IMAGE    │    │
└───────────────────────────────────────────┘ │
            │                               │
            ▼                               │
┌───────────────────────────────────────────┐ │
│  PERFORM GRADATION CONVERSION ON α-FOLD    │ ⟋S15 │
│   ORIGINAL IMAGE BY USING DITHERING PROCESS TO │  │
│ GENERATE GRADATION-CONVERTED α-FOLD ORIGINAL IMAGE │ │
└───────────────────────────────────────────┘ │
            │                               │
            ▼                               │
┌───────────────────────────────────────────┐ │
│ CALCULATE DIFFERENCE BETWEEN GRADATION-CONVERTED │ ⟋S16 │
│     α-FOLD ORIGINAL IMAGE AND QUANTIZED α-FOLD   │  │
│ ORIGINAL IMAGE TO OBTAIN HIGH-FREQUENCY COMPONENT │ │
└───────────────────────────────────────────┘ │
            │                          S17    │
            ▼                               │
      ╱ HAS HIGH-FREQUENCY COMPONENT FOR ╲  NO │
     ╱ ALL OF ONE OR MORE PREDETERMINED VALUES ╲──┘
      ╲ OF COEFFICIENTS α BEEN OBTAINED? ╱
            │ YES
            ▼
┌─────────────────────────────────┐
│ OUTPUT SET OF 8-BIT QUANTIZED IMAGE │ ⟋S18
│  AND HIGH-FREQUENCY COMPONENT   │
│      AS DATA TO BE BLENDED      │
└─────────────────────────────────┘
            │
            ▼
      (     END     )
```

FIG. 11

TV42

HIGH-FREQUENCY COMPONENT
IN GRADATION-CONVERTED α-FOLD ORIGINAL IMAGE

71 STORAGE UNIT

8-BIT QUANTIZED IMAGE

CONTENT IMAGE

12 BLENDING UNIT

13 × α

14 × 1-α

15 +

16 QUANTIZING UNIT

72 +

73 LIMITER

17 DISPLAY

FIG. 12A

FIG. 12B

FIG. 13A

FIG. 13B

FIG. 14A

FIG. 14B

FIG. 14C

# FIG. 15

```
( COMPOSITE IMAGE DISPLAY PROCESS )
                    │
                    ▼
        ┌─────────────────────────┐
        │  GENERATE COMPOSITE IMAGE │  S31
        │   THROUGH α BLENDING     │
        └─────────────────────────┘
                    │
                    ▼
      ┌───────────────────────────────┐
      │  QUANTIZE COMPOSITE IMAGE TO   │  S32
      │ GENERATE QUANTIZED COMPOSITE IMAGE │
      └───────────────────────────────┘
                    │
                    ▼
    ┌─────────────────────────────────────┐
    │    ADD HIGH-FREQUENCY COMPONENT      │  S33
    │     TO QUANTIZED COMPOSITE IMAGE     │
    │ TO GENERATE PSEUDO HIGH-GRADATION IMAGE │
    └─────────────────────────────────────┘
                    │
                    ▼
        ┌─────────────────────────┐
        │     LIMIT PIXEL VALUES OF │  S34
        │ PSEUDO HIGH-GRADATION IMAGE │
        └─────────────────────────┘
                    │
                    ▼
      ┌───────────────────────────────┐
      │ DISPLAY PSEUDO HIGH-GRADATION IMAGE │  S35
      └───────────────────────────────┘
                    │
                    ▼
                ( END )
```

FIG. 16

FIG. 17

# FIG. 18

# FIG. 19

FIG. 20A $\left\{\begin{array}{l} g(1, 1) = -0.0317 \\ g(2, 1) = -0.1267 \\ g(3, 1) = -0.1900 \\ g(4, 1) = -0.1267 \\ g(5, 1) = -0.0317 \\ g(1, 2) = -0.1267 \\ g(2, 2) = 0.2406 \\ g(3, 2) = 0.7345 \\ g(4, 2) = 0.2406 \\ g(5, 2) = -0.1267 \\ g(1, 3) = -0.1900 \\ g(2, 3) = 0.7345 \end{array}\right.$

FIG. 20B

FIG. 21A $\left\{\begin{array}{l} g(1, 1) = -0.0249 \\ g(2, 1) = -0.0996 \\ g(3, 1) = -0.1494 \\ g(4, 1) = -0.0996 \\ g(5, 1) = -0.0249 \\ g(1, 2) = -0.0996 \\ g(2, 2) = 0.2248 \\ g(3, 2) = 0.6487 \\ g(4, 2) = 0.2248 \\ g(5, 2) = -0.0996 \\ g(1, 3) = -0.1494 \\ g(2, 3) = 0.6487 \end{array}\right.$

## FIG. 21B

FIG. 22A
$$\begin{cases}
g(1, 1) = -0.0397 \\
g(2, 1) = -0.1586 \\
g(3, 1) = -0.2379 \\
g(4, 1) = -0.1586 \\
g(5, 1) = -0.0397 \\
g(1, 2) = -0.1586 \\
g(2, 2) = 0.2592 \\
g(3, 2) = 0.8356 \\
g(4, 2) = 0.2592 \\
g(5, 2) = -0.1586 \\
g(1, 3) = -0.2379 \\
g(2, 3) = 0.8356
\end{cases}$$

FIG. 22B

# FIG. 23

# FIG. 24

EP 2 182 735 A2

**EP 2 182 735 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008277701 A